(19) Europäisches Patentamt
European Patent Office
Office européen des brevets

(11) **EP 3 742 822 B1**

(12) **EUROPEAN PATENT SPECIFICATION**

(45) Date of publication and mention
of the grant of the patent:
**13.12.2023 Bulletin 2023/50**

(21) Application number: **19751613.1**

(22) Date of filing: **01.02.2019**

(51) International Patent Classification (IPC):
**H04L 5/14** (2006.01)     **H04W 52/14** (2009.01)
**H04W 52/24** (2009.01)    **H04L 5/00** (2006.01)
**H04W 52/36** (2009.01)    **H04W 52/38** (2009.01)

(52) Cooperative Patent Classification (CPC):
**H04W 52/146; H04L 5/0005; H04L 5/0032;
H04L 5/0053; H04L 5/0073; H04L 5/0078;
H04L 5/0091; H04W 52/14; H04W 52/24;
H04W 52/244; H04W 52/36; H04W 52/38;**
H04L 5/0048; H04L 5/1469

(86) International application number:
**PCT/CN2019/074495**

(87) International publication number:
**WO 2019/154336 (15.08.2019 Gazette 2019/33)**

(54) **POWER CONTROL METHOD AND COMMUNICATION APPARATUS**

LEISTUNGSSTEUERUNGSVERFAHREN UND KOMMUNIKATIONSVORRICHTUNG

PROCÉDÉ DE COMMANDE DE PUISSANCE ET DISPOSITIF DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.02.2018 CN 201810135754**

(43) Date of publication of application:
**25.11.2020 Bulletin 2020/48**

(73) Proprietor: Huawei Technologies Co., Ltd.
**Longgang District
Shenzhen, Guangdong 518129 (CN)**

(72) Inventors:
• **WANG, Yafei
Shenzhen, Guangdong 518129 (CN)**
• **MA, Xiaojun
Shenzhen, Guangdong 518129 (CN)**
• **ZHANG, Chi
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(56) References cited:
WO-A1-2014/179979     CN-A- 103 326 809
CN-A- 104 735 768      US-A1- 2014 086 112

• **SAMSUNG: "Cross-link interference
management based on power control", 3GPP
DRAFT; R1-1710758, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Qingdao,
P.R. China; 20170627 - 20170630 26 June 2017
(2017-06-26), XP051299963, Retrieved from the
Internet:
URL:http://www.3gpp.org/ftp/Meetings_3GPP_
SYNC/RAN1/Docs/ [retrieved on 2017-06-26]**
• **HUAWEI ET AL: "System design aspects on
duplexing flexibility", 3GPP DRAFT; R1-1704243,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE , vol. RAN
WG1, no. Spokane, USA; 20170403 - 20170407 25
March 2017 (2017-03-25), XP051251052,
Retrieved from the Internet:
URL:http://www.3gpp.org/ftp/tsg_ran/WG1_RL
1/TSGR1_88b/Docs/ [retrieved on 2017-03-25]**

- CATT: "On Semi-static and Dynamic Signaling of SFI", 3GPP TSG RAN WG1 Meeting #91 R1-1720192, 1 December 2017 (2017-12-01), pages 2-7, XP051369828,
- "Remaining Issues on Power Control for NR", 3GPP TSG RAN WG1 Meeting #91 RI -1720706, 1 December 2017 (2017-12-01), XP051370166,

EP 3 742 822 B1

## Description

### TECHNICAL FIELD

This application relates to the communications field, and more specifically, to a power control method and a communications apparatus.

### BACKGROUND

In 5th generation mobile communications (5 generation, 5G) new radio (new radio, NR) standardization work, a time domain resource in one slot (slot) may support a flexible slot structure, that is, all symbols in one slot may be used for uplink or downlink, or some symbols may be used for uplink, some symbols may be used for downlink, and some symbols are of an unknown type. A network device indicates a slot structure by using a group common physical downlink control channel (group common physical downlink control channel, GC PDCCH). The slot structure may also be understood as a slot format (slot format), and is indicated by slot format related information (slot format related information) carried by the GC PDCCH. The network device sends the GC PDCCH. The terminal device detects the GC PDCCH, to obtain symbols used for uplink, symbols used for downlink, and symbols that are unknown (unknown) in a slot. An unknown resource may be understood as neither used for uplink nor used for downlink, for example, may be a blank resource, a reserved resource, or a time that may be used for uplink-downlink switching.

In 5G, a transmission status of a symbol in a slot dynamically changes. For example, a slot structure of the slot dynamically changes and is dynamically indicated. Therefore, inter-cell cross interference is severe, and it is difficult to predict the inter-cell cross interference. How to effectively determine an uplink power control parameter set of an interfering cell in an uplink slot, to reduce cross interference received by a terminal in an interfered cell when the terminal receives downlink data is a problem that urgently needs to be resolved currently.

Document SAMSUNG, "Cross-link interference management based on power control", vol. RAN WG1, no. Qingdao, P.R. China; 20170626, 3GPP DRAFT; R1-1710758, 3RD GENERATION PARTNERSHIP PROJECT (3GPP) generally discusses some of cross-link interference management using uplink transmit power control for the NR design. Document US 2014/086112 A1 generally discloses a method for Time Division Duplex (TDD) operation in a wireless transmit/receive unit (WTRU). The method includes receiving a first TDD uplink (UL)/downlink (DL) configuration for a serving cell, receiving a second TDD UL/DL configuration for the serving cell, receiving an indication of directions to use for subframes with conflicting directions between the first TDD UL/DL configuration and the second TDD UL/DL configuration, using the first TDD LTL/DL configuration for timing of UL scheduling and UL Hybrid Automatic Repeat Request (HARQ), using the second TDD LTL/DL configuration for timing of DL scheduling and DL HARQ, and determining a direction for each subframe with conflicting directions based on the received indication, wherein on a condition that the determined direction for a subframe with conflicting directions is DL, receiving in the subframe in the DL.

### SUMMARY

This application provides a power control method and a communications apparatus, so that obtained SFI that dynamically changes in a neighboring cell may be used in determining of an uplink power control parameter set of a serving cell of a terminal device. This helps reduce inter-cell cross interference and improve a system throughput. In particular, there is provided a power control method according to claim 1, a communications apparatus according to claim 7 and a computer-readable storage medium according to claim 8. The dependent claims relate to preferred embodiments. According to a first aspect, a power control method is provided, including: obtaining, by a terminal device, slot format information SFI of a target slot in a non-serving cell; and determining, by the terminal device based on the SFI, a power control parameter set used by the terminal device to send data in the target slot in a serving cell, where the power control parameter set belongs to a set of power control parameter sets configured for the terminal device.

According to the power control method provided in the first aspect, when a time domain resource conflict exists between a serving cell and a non-serving cell of the terminal device, the terminal device may obtain slot format information SFI that is of a target slot and that dynamically changes in the non-serving cell. A power control parameter set in the target slot is determined, based on the SFI, in a set of power control parameter sets configured for the terminal device in the target slot in the serving cell. Data is sent in the target slot in the serving cell by using a power control parameter in the power control parameter set. The power control parameter set used by the terminal device in the target slot in the serving cell may be effectively determined by using information about the SFI that dynamically changes in the target slot in the non-serving cell. A status of interference caused by the non-serving cell in the target slot to uplink transmission in the target slot in the serving cell is determined by using the SFI that dynamically changes in the non-serving cell, so that the power control parameter set used by the terminal device in the target slot in the serving cell is further determined based on the status of the interference. The SFI that dynamically changes in the target slot of the non-serving cell is flexibly applied. This can improve efficiency and accuracy of determining, by the terminal device, the power control parameter set, further reduce interference caused by the non-serving cell to uplink data transmission of the serving cell on a same time domain resource, improve a system throughput, improve a rate for ensuring normal communication of a user, and improve user experience.

In a possible implementation of the first aspect, the method further includes: receiving, by the terminal device, first information sent by a network device, where the first information is used to indicate a subset of the set of power control parameter sets; and the determining, by the terminal device based on the SFI, a power control parameter set used by the terminal device to send data in the target slot in a serving cell includes: determining, by the terminal device based on the SFI, in the subset of the set of power control parameter sets, the power control parameter set used by the terminal device to send data in the target slot in the serving cell. In this implementation, information about a remaining power control parameter set that may be used by the terminal device or information about the subset of the set of power control parameter sets is indicated to the terminal device, so that a range of used power control parameter sets determined by the terminal device can be reduced, efficiency of the terminal device in determining a power control parameter set can be improved, resources can be saved, and a time for determining, by the terminal device, the power control parameter set can be reduced, thereby improving communication efficiency and user experience.

In a possible implementation of the first aspect, the method further includes: receiving, by the terminal device, second information sent by the network device, where the second information is used to indicate a time domain resource used by the terminal device to send data in the target slot in the serving cell; and further determining, by the terminal device based on the time domain resource, a power control parameter set used by the terminal device to send the data in the target slot in the serving cell. In this implementation, the terminal device can be enabled to more accurately determine a transmission status of the target slot in the serving cell, more accurately determine a status of interference from the non-serving cell, and more accurately determine a power control parameter set that needs to be used, thereby improving efficiency and accuracy of the terminal device in determining the power control parameter set to be used, reducing interference caused by the non-serving cell to uplink data transmission of the serving cell on a same time domain resource, improving efficiency and a capability of interference cancellation, and improving user experience.

In a possible implementation of the first aspect, in the serving cell, a transmission status of a symbol corresponding to a first time period in the target slot is uplink transmission, and the determining, by the terminal device based on the SFI, a power control parameter set used by the terminal device to send data in the target slot in a serving cell includes: determining, by the terminal device based on the transmission status of the symbol corresponding to the first time period in the target slot in the non-serving cell, a power control parameter set used by the terminal device to send data in the symbol corresponding to the first time period in the target slot in the serving cell. In this implementation, the power control parameter set used by the terminal device can be more accurately determined, thereby improving efficiency and accuracy of the terminal device in determining the used power control parameter set.

In a possible implementation of the first aspect, the determining, by the terminal device based on the transmission status of the symbol corresponding to the first time period in the target slot in the non-serving cell, a power control parameter set used by the terminal device to send data in the symbol corresponding to the first time period in the target slot in the serving cell includes: determining, by the terminal device based on a relationship between the quantity of non-serving cells and a quantity of non-serving cells in which uplink transmission conflicts with the transmission status of the symbol corresponding to the first time period in the target slot in the non-serving cell, in the set of power control parameter sets configured for the terminal device, the power control parameter set used by the terminal device to send data in the symbol corresponding to the first time period in the target slot in the serving cell. In this implementation, the power control parameter set used by the terminal device to send data in the symbol corresponding to the first time period in the target slot in the serving cell is determined by using the relationship between the quantity of conflicting non-serving cells and the quantity of non-serving cells, so that the power control parameter set for sending data in the symbol corresponding to the first time period in the target slot in the serving cell can be rapidly determined, thereby improving accuracy and efficiency of determining the power control parameter set, and improving communication efficiency and user experience.

In a possible implementation of the first aspect, the method further includes: receiving, by the terminal device, third information sent by the network device, where the third information is used to indicate a time-frequency resource used by the terminal device to receive the SFI of the target slot in the non-serving cell; and receiving, by the terminal device on the time-frequency resource indicated by the third information, the slot format information SFI of the target slot in the non-serving cell. In this implementation, information about a resource for detecting the SFI is indicated to the terminal device, so that the terminal device can dynamically obtain the SFI in real time. This improves accuracy and flexibility of the obtained slot format information SFI of the target slot in the non-serving cell, so that the terminal device can more accurately determine the power control parameter set used by the terminal device to send data in the target slot in the serving cell, thereby further reducing interference caused by the non-serving cell to uplink data transmission of the serving cell on a same time domain resource, improving a system throughput, improving a rate for ensuring normal communication of a user, and improving user experience.

According to a second aspect, a power control method is provided, including: obtaining, by a network device, configuration information of a target slot in a non-serving cell of a terminal device; and sending, by the network device, third information to the terminal device in a serving cell based on the configuration information, where the third information is used to indicate a time-frequency resource used by the terminal device to receive slot format information SFI of the target slot in the non-serving cell. According to the power control method provided in the second aspect, the network device notifies information about a resource for detecting the SFI to the terminal device, so that the terminal device can dynamically obtain the SFI in real time. This improves accuracy and flexibility of the obtained slot format information SFI of the target slot in the non-serving cell, so that the terminal device can more accurately determine a power control parameter set used by the terminal device to send data in the target slot in the serving cell, thereby further reducing interference caused by the non-serving cell to uplink data transmission of the serving cell on a same time domain resource, improving a system throughput, improving a rate for ensuring normal communication of a user, and improving user experience.

In a possible implementation of the second aspect, the method further includes: sending, by the network device, first information to the terminal device based on the configuration information, where the first information is used to indicate a subset that is of a set of power control parameter sets and that is included in the set of power control parameter sets, and the target slot in the serving cell corresponds to the set of power control parameter sets. In this implementation, the network device indicates information about a remaining power control parameter set that may be used by the terminal device or information about the subset of the set of power control parameter sets to the terminal device, so that a range of used power control parameter sets determined by the terminal device can be reduced, efficiency of the terminal device in determining a power control parameter set can be improved, resources can be saved, and a time for determining, by the terminal device, the power control parameter set can be reduced, thereby improving communication efficiency and user experience.

In a possible implementation of the second aspect, a transmission status of a symbol corresponding to a first time period in the target slot in the serving cell is uplink transmission, and the method further includes: determining, by the network device based on the configuration information, a transmission status of a symbol corresponding to the first time period in the target slot in the non-serving cell; and determining, by the network device, the first information based on the transmission status of the symbol corresponding to the first time period in the target slot in the non-serving cell. In this implementation, accuracy of the first information can be improved, and a power control parameter set or the subset of the set of power control parameter sets that may be used by the terminal device can be more accurately determined, thereby improving efficiency of the terminal device in determining the used power control parameter set, reducing interference caused by the non-serving cell to uplink data transmission of the serving cell on a same time domain resource, improving efficiency and a capability of interference cancellation, and improving user experience.

In a possible implementation of the second aspect, the determining, by the network device, the first information based on the transmission status of the symbol corresponding to the first time period in the target slot in the non-serving cell includes: determining, by the network device, a subset of the set of power control parameter sets based on transmission statuses of symbols corresponding to some non-serving cells in the first time period in the target slot in the non-serving cell, where the subset of the set of power control parameter sets includes a plurality of power control parameter sets; and determining, by the network device, the first information based on the subset of the set of power control parameter sets. In this implementation, a power control parameter set that may be used by the terminal device or the subset of the set of power control parameter sets can be more accurately determined, thereby improving efficiency of the terminal device in determining the power control parameter set, reducing interference caused by the non-serving cell to uplink data transmission of the serving cell on a same time domain resource, and improving efficiency and a capability of interference cancellation.

In a possible implementation of the second aspect, the determining, by the network device, the first information based on the transmission status of the symbol corresponding to the first time period in the target slot in the non-serving cell includes: determining, by the network device, a subset of the set of power control parameter sets based on transmission statuses of all symbols corresponding to the first time period in the target slot in the non-serving cell; and determining, by the network device, the first information based on the subset of the set of power control parameter sets. In this implementation, a power control parameter set that may be used by the terminal device or the subset of the set of power control parameter sets can be more accurately determined, thereby improving efficiency of the terminal device in determining the power control parameter set, reducing interference caused by the non-serving cell to uplink data transmission of the serving cell on a same time domain resource, and improving efficiency and a capability of interference cancellation.

In a possible implementation of the second aspect, the method further includes: sending, by the network device, second information to the terminal device, where the second information is used to indicate a time domain resource used by the terminal device to send uplink data in the target slot in the serving cell. In this implementation, the network device notifies, to the terminal device by using indication information, the time domain resource used by the terminal device to send the uplink data in the target slot in the serving cell, so that the terminal device can more accurately determine a transmission status of the target slot in the serving cell, more accurately determine a status of interference from the non-serving cell, and more accurately determine the power control parameter set that needs to be used, thereby improving efficiency and accuracy of the terminal device in determining the power control parameter set to be used, reducing interference of the non-serving cell to uplink data transmission of the serving cell on a same time domain resource, improving efficiency and a capability of interference cancellation, and improving user experience.

According to a third aspect, a communications apparatus is provided, including a processor, a memory, and a transceiver, configured to support the communications apparatus in performing a corresponding function of the terminal device in the foregoing method. The processor, the memory, and the transceiver are connected through communication. The memory stores an instruction. The transceiver is configured to perform specific signal sending and receiving under drive of the processor. The processor is configured to invoke the instruction to implement the power control method according to the first aspect and the various implementations of the first aspect.

According to a first example, a communications apparatus is provided, including a processing module, a storage module, and a transceiver module, configured to support the communications apparatus in performing a function of the terminal device according to any one of the first aspect and the possible implementations of the first aspect. The function may be implemented by hardware, or may be implemented by hardware executing corresponding software. The hardware or the software includes one or more modules corresponding to the foregoing function.

According to a fourth aspect, a communications apparatus is provided, including a processor, a memory, and a transceiver, configured to support the communications apparatus in performing a corresponding function of the network device in the foregoing method. The processor, the memory, and the transceiver are connected through communication. The memory stores an instruction. The transceiver is configured to perform specific signal sending and receiving under drive of the processor. The processor is configured to invoke the instruction to implement the power control method according to the second aspect and the various implementations of the second aspect.

According to a second example, a communications apparatus is provided, including a processing module, a storage module, and a transceiver module, configured to support the communications apparatus in performing a function of the network device according to any one of the second aspect and the possible implementations of the second aspect. The function may be implemented by hardware, or may be implemented by hardware executing corresponding software. The hardware or the software includes one or more modules corresponding to the foregoing function.

According to a third example, a communications system is provided, including the communications apparatus provided in the third aspect or the first example and the communications apparatus provided in the fourth aspect or the second example. The communications system may implement the power control method provided in the first aspect or the second aspect. Obtained SFI that dynamically changes in a neighboring cell may be used in determining of an uplink power control parameter set. This helps reduce inter-cell cross interference and improve a system throughput.

According to a fifth aspect, a computer-readable storage medium is provided, configured to store a computer program. The computer program includes an instruction for performing the method according to any one of the first aspect or the possible implementations of the first aspect, or any one of the second aspect or the possible implementations of the second aspect.

According to a fourth example, a system chip is provided, including a processing unit and a communications unit. The processing unit may execute a computer executable instruction, to cause a chip in a terminal to perform the method according to any one of the first aspect or the possible implementations of the first aspect, or any one of the second aspect or the possible implementations of the second aspect.

## BRIEF DESCRIPTION OF DRAWINGS

FIG. 1 is a schematic diagram of a communications system of a power control method applicable to this application;

FIG. 2 is a schematic diagram of an architecture of a 5G network of a power control method applicable to this application;

FIG. 3 is a schematic diagram of an architecture of an LTE network of a power control method applicable to this application;

FIG. 4 is a schematic diagram of implementing inter-cell interference coordination by using an ABS;

FIG. 5 is a schematic flowchart of a power control method according to an embodiment of this application;

FIG. 6 is a schematic diagram of a serving cell and a non-serving cell according to an embodiment of this application;

FIG. 7 is a schematic flowchart of a power control method according to another embodiment of this application;

FIG. 8 is a schematic flowchart of a power control method according to still another embodiment of this application;

FIG. 9 is a schematic flowchart of a power control method according to another embodiment of this application;

FIG. 10 is a schematic flowchart of a power control method according to another embodiment of this application;

FIG. 11 is a schematic block diagram of a communications apparatus according to an embodiment of this application;

FIG. 12 is a schematic block diagram of a communications apparatus according to another embodiment of this application;

FIG. 13 is a schematic block diagram of a communications apparatus according to an embodiment of this application; and

FIG. 14 is a schematic block diagram of a communications apparatus according to another embodiment of this application.

## DESCRIPTION OF EMBODIMENTS

The following describes technical solutions of this application with reference to the accompanying drawings.

The technical solutions of this application may be applied to various communications systems, such as a global system for mobile communication (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD), a universal mobile telecommunications system (universal mobile telecommunication system, UMTS) system, a worldwide interoperability for microwave access (worldwide interoperability for microwave access, WiMAX) communications system, and a future 5G NR system, and the like.

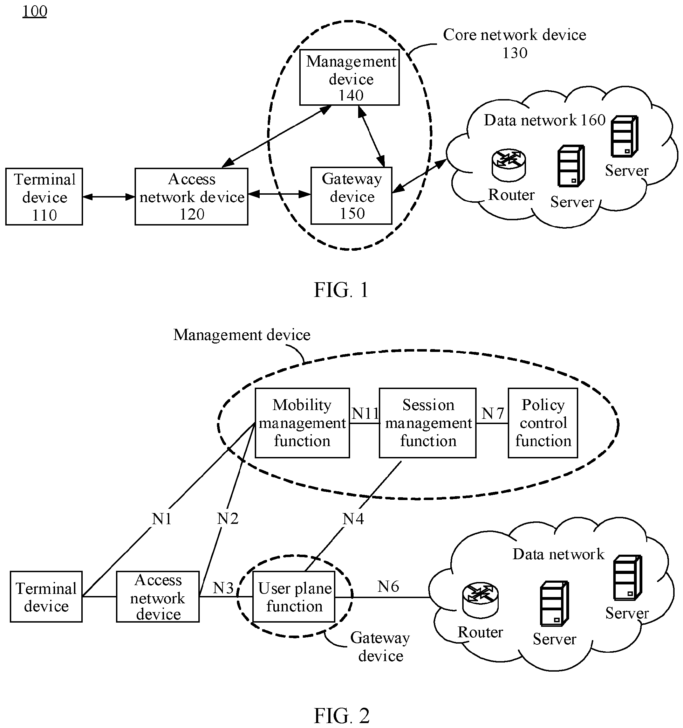

FIG. 1 is a schematic block diagram of a power control method and a wireless communications system architecture 100 according to this application. As shown in FIG. 1, the system architecture 100 includes a terminal device 110, an access network device 120, a core network device 130, and a data network 160 (data network, DN).

The core network device 130 includes a management device 140 and a gateway device 150. The terminal device 110 in FIG. 1 may be configured to connect, through an air interface, to the access network device 120 deployed by an operator, and then connect to the data network by using the core network device 130. The access network device 120 is mainly configured to implement functions such as a wireless physical layer function, resource scheduling and radio resource management, radio access control, and mobility management. The core network device 130 may include the management device 140 and the gateway device 150. The management device 140 is mainly used for device registration, security authentication, mobility management, location management, and the like of the terminal device. The gateway device 150 is mainly configured to establish a channel with the terminal device, and forward a data packet between the terminal device and an external data network on the channel. The data network 160 may correspond to various types of service domains, for example, an IP multimedia subsystem (IP multimedia subsystem, IMS), an internet, an internet protocol television (internet protocol television, IPTV), and another operator service domain, is mainly configured to provide various types of data services, and may include network devices such as a server (including a service providing a multicast service), a router, and a gateway. It should be noted that FIG. 1 is only an example diagram of the architecture. In addition to the functional units shown in FIG. 1, the network architecture may also include another functional unit or functional entity. This is not limited in this embodiment of this application.

When a communications network shown in FIG. 1 is a 5G network, the terminal device may be user equipment (user equipment, UE), for example, a mobile phone or a computer, or may be a cellular phone, a cordless phone, a session initiation protocol (session initiation protocol, SIP) phone, a smartphone, a wireless local loop (wireless local loop, WLL) station, a personal digital assistant (personal digital assistant, PDA), a computer, a laptop computer, a handheld communications device, a handheld computing device, a satellite wireless device, a wireless modem card, a set top box (set top box, STB), a customer premise equipment (customer premise equipment, CPE), and/or another device configured to communicate in a wireless system. The access network device may be a network including a plurality of 5G-AN/5G radio access nodes. The 5G-AN/5G radio access node may be an access point (access point, AP), a new radio NodeB (NR NodeB, gNB), a gNB with a central unit (central unit, CU) and a distributed unit (distributed unit, DU) that are in a separated form, a transmission/reception point (transmission receive point, TRP), a transmission point (transmission point, TP), or some other access node. The core network device may include functional units such as an access and mobility management function (access and mobility function, AMF), a session management function (session management function, SMF), a policy control function (policy control function, PCF), and a user plane function (user plane function, UPF). These functional units may work independently, or may be combined to implement some control functions. For example, the AMF, the SMF, and the PCF may be combined as a management device, configured to complete access control and mobility management functions such as access authentication, security encryption, and location registration of the terminal device, session management functions such as establishment, release, and change of a user plane transmission path, and functions of analyzing some data related to slices (slice) and data related to the terminal device. The UPF, functioning as the gateway device, mainly completes functions such as routing and forwarding of user plane data. For example, the UPF is responsible for data packet filtering, data transmission/forwarding, rate control, and charging information generation for the terminal device.

FIG. 2 is a schematic diagram of an architecture of a 5G network according to an embodiment of this application. In the 5G network shown in FIG. 2, functional units may establish a connection through a next generation (NG) interface to implement communication. For example, a terminal device establishes an air interface connection to an access network device through an NR interface, used to transmit user plane data and control plane signaling. The terminal device may establish a control plane signaling connection to an AMF through an NG interface 1 (N1 for short). The access network device, such as a new radio NodeB (NR NodeB, gNB), may establish a user plane data connection to a UPF through an NG interface 3 (N3 for short). The access network device may establish a control plane signaling connection to the AMF through an NG interface 2 (N2 for short). The UPF may establish a control plane signaling connection to an SMF through an NG interface 4 (N4 for short). The UPF may exchange user plane data with a data network through an NG interface 6 (N6 for short). The AMF may establish a control plane signaling connection to the SMF through an NG interface 11 (N11 for short). The SMF may establish a control plane signaling connection to a PCF through an NG interface 7 (N7 for short). It should be noted that a part shown in FIG. 2 is only an example diagram of the architecture. In addition to the functional units shown in FIG. 2, the network architecture may also include another functional unit or functional entity. For example, the core network device may also include another functional unit such as a unified data management function (unified data management, UDM). This is not limited in this embodiment of this application.

When the communications network shown in FIG. 1 is an LTE network, for the terminal device, reference may be made to the related description of the terminal device shown in FIG. 2. Details are not described herein again. The access network device may be a NodeB (NodeB, NB), an evolved NodeB (evolution NodeB, eNB), a TRP, a TP, an AP, or some other access unit. The core network device may include a management device such as a mobility management entity (mobility management entity, MME) or a policy and charging rules function (policy and charging rules function, PCRF), and a gateway device such as a serving gateway (serving gateway, SGW), a packet data network gateway (packet data network gateway, PGW), or a local gateway (local gateway, LGW).

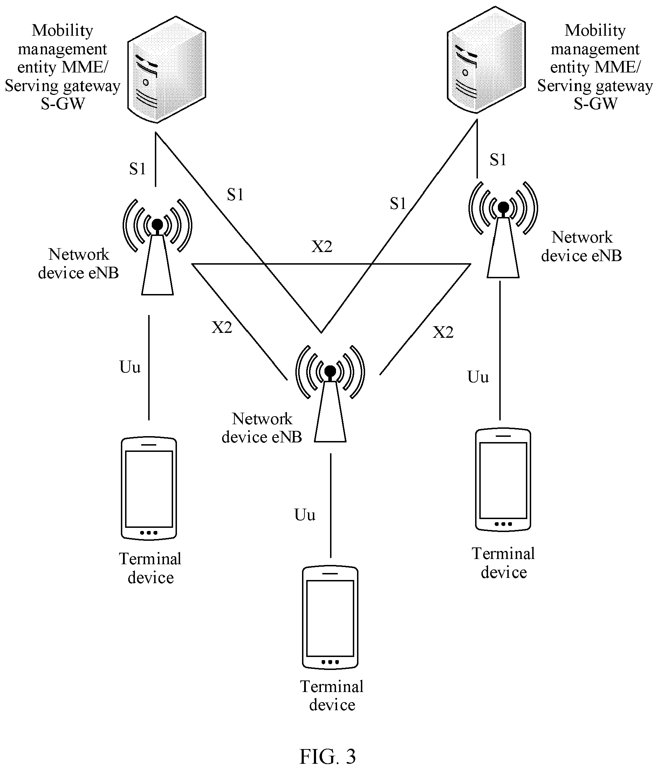

FIG. 3 is a schematic diagram of an architecture of an LTE network according to an embodiment of this application. A terminal device may establish an air interface connection to an eNB through a Uu interface. Data may be exchanged between eNBs through an X2 interface.

The eNB is connected to an MME through an S 1 interface and is used for transmission of control signaling and the like. The MME is a key control node in 3GPP LTE, belongs to a core network element, and is mainly responsible for a signaling processing part, that is, a control plane function, including functions such as access control, mobility management, attachment and detachment, a session management function, and gateway selection. The eNB establishes a user plane data connection to a serving gateway (service gateway, S-GW) through an S 1-U interface. The S-GW is an important network element of a core network in 3GPP LTE and is mainly responsible for a user plane function of user data forwarding, that is, routing and forwarding of a data packet under control of the MME. It should be noted that FIG. 2 is only an example diagram of the architecture. This is not limited in this embodiment of this application.

In 5G NR standardization work, a time domain resource in one slot (slot) may support a flexible slot structure, that is, all symbols in one slot may be used for uplink or downlink, or some symbols may be used for uplink, and some symbols may be used for downlink. It is specified in a standard that a manner in which the terminal device obtains a slot format is as follows: A network device configures, for the terminal device, an occasion (occasion) for detecting information carrying slot format information (slot format information, SFI) (that is, a slot/time domain resource that can be used to detect a GC-PDCCH), a detection control resource set (control resource set, CORSET) of the GC-PDCCH, and a radio network temporary identifier (radio network temporary identity, RNTI) used to detect the SFI. The terminal device detects, on a corresponding time domain resource and a corresponding frequency domain resource based on configuration information of the network device, the GC-PDCCH that carries the SFI, to obtain the slot format information of a target slot.

In 5G, a transmission configuration status of a symbol in a slot dynamically changes. A dynamically changing slot format may result in different cross interference on each slot, and is more difficult to predict. Therefore, it is difficult to determine an uplink power control parameter set corresponding to a slot with cross interference. In NR, uplink power control supports configurations of a plurality of open-loop parameter sets (uplink power control parameter sets). Different uplink power control parameter sets may be associated with different application scenarios/service types/channel types, and the like. For example, for a physical uplink shared channel (physical uplink shared channel, PUSCH), the terminal device determines that an uplink transmit power on a carrier f in a serving cell c is:

$$P_{\text{PUSCH},f,c}(i,j,q_d,l) = \min \left\{ \begin{array}{l} P_{\text{CMAX},f,c}(i), \\ P_{\text{O\_PUSCH},f,c}(j) + 10\log_{10}(2^\mu \cdot M_{\text{RB},f,c}^{\text{PUSCH}}(i)) + \alpha_{f,c}(j) \cdot PL_{f,c}(q_d) + \Delta_{\text{TF},f,c}(i) + f_{f,c}(i,l) \end{array} \right\}$$

(1)

In formula (1), i is used to identify a time period used for uplink transmission, and the time period for uplink transmission may be a subframe, a slot, at least one symbol in a slot, or the like; l is used to identify a calculation status of transmission power control (transmission power control, TPC) of a PUSCH, where $l \in \{1,2\}$; j is used to identify a

parameter set {P0, $\alpha$}; and $q_d$ is used to identify a downlink reference signal configuration based on which a path loss value is obtained.

$P_{CMAX,f,c}(i)$ is a maximum transmit power configured by the terminal device in the time period i for PUSCH transmission, i is a positive integer. For example, a value of i is 1, 2, 3, or the like.

$P_{O\_PUSCH,f,c}(j)$ is an expected receive power configured by the network device, and a value of the expected receive power includes two parts, where $P_{O\_PUSCH,f,c}(j) = P_{O\_NOMINAL\_PUSCH,f,c}(j) + P_{O\_UE\_PUSCH,f,c}(j)$, , a value range of j is {0, 1, ..., J-1}, and $P_{O\_UE\_PUSCH,f,c}(j)$ is configured by using a group of higher layer signaling parameters p0-pusch-alpha-set.

Specifically, for a message 3 (message 3, Msg3) in a random access process, j=0, that is, j=0 is associated with or applied to determining of a transmit power of the Msg3, $P_{O\_UE\_PUSCH,f,c}(0) = 0$, and $P_{O\_NOMINAL\_PUSCH,f,c}(0) = P_{O\_PRE} + \Delta_{PREAMBLE\_Msg3}$, where $P_{O\_PRE}$ is determined by a higher layer parameter initial preamble received power (preamble initial received target power), and $P_{O\_UE\_PUSCH,f,c}(0) = 0$, is determined by a higher layer parameter Delta-preamble-msg3.

For grant-free (Grant-Free) or semi-persistent scheduling (semi-persistent scheduling) transmission, j=1, and $P_{O\_NOMINAL\_PUSCH,f,c}(1)$ is indicated by higher layer signaling p0-nominal-pusch-withoutgrant. $P_{O\_UE\_PUSCH,f,c}(1)$ is configured by using higher layer signaling p0-ue-pusch.

For $j \in \{2,3,...J - 1\} = S_J$, a same $P_{O\_NOMINAL\_PUSCH,f,c}(j)$ is configured. That is, $P_{O\_NOMINAL\_PUSCH,f,c}(j)$ is the same for all $j \in \{2,3,...J - 1\} = S_J$. $M_{RB,f,c}^{PUSCH}(i)$ is a quantity of resource blocks (Resource Block, RB) allocated to PUSCH transmission in the transmission time period i.

For a path loss compensation factor $\alpha_{f,c}(j)$, when j=0, $\alpha_{f,c}(0)=1$. When j=1, $\alpha_{f,c}(1)$ is configured by using a higher layer signaling parameter alpha. $j \in \{2,3,...J - 1\} = S_J$ is configured by a group of higher layer signaling parameters p0-pusch-alpha-set.

$q_d$ is a path loss compensation value and is obtained based on a reference signal resource (reference signal resource) $q_d$, and $q_d$ = reference signal power (reference signal power) - higher layer filtered reference signal received power (higher layer filtered reference signal receiving power), where the reference signal power is indicated by higher layer signaling. A quantity of reference signals (reference signal, RS) is configured by using a higher layer signaling parameter num-pusch-pathlossReference-rs. A specific RS resource configuration is configured by using a higher layer signaling parameter pusch-pathloss-reference-rs.

$$\Delta_{TF,f,c}(i) = 10\log_{10}((2^{BPRE.K_S} - 1).\beta_{offset}^{PUSCH})$$ is a power offset value related to a transmission format in the transmission time period i.

When $f_{f,c}(i,l) = f_{f,c}(i-1,l) + \delta_{PUSCH,f,c}(i - K_{PUSCH},l)$ or $f_{f,c}(i,l) = \delta_{PUSCH,f,c}(i - K_{PUSCH},l)$, a dynamic power adjustment value is determined based on a TPC parameter indication in downlink control information (downlink control information, DCI).

$l \in \{1,2\}$ or $l =1$, and is a TPC calculation state of the PUSCH. A specific value is determined based on a higher layer signaling parameter num-pusch-pcadjustment-states.

For example, according to the foregoing formula (1), for a terminal device, because values of j are different, for different slots, uplink power control parameters (sets) corresponding to different slots may be calculated by using the foregoing formula (1). The terminal device may determine, based on the calculated uplink power control parameter (set), a transmit power control parameter set used during uplink data transmission, and transmit uplink data by using a power control parameter in the transmit power control parameter set. For different transmission cases (for example, when data transmission performed by the terminal device in the serving cell is interfered with by transmission in a non-serving cell), the terminal device may use different uplink power control parameter sets, to minimize interference and improve transmission efficiency.

Currently, for a case in which interference exists between cells, a further enhanced inter-cell interference coordination (further enhanced inter-cell interference coordination, FeICIC) technology may be used to reduce interference to a neighboring cell. To be specific, an almost blank frame (almost blank subframe, ABS) is introduced to implement time domain coordination and reduce interference.

The ABS mainly includes the following content:

(1) There may be transmission of a cell common signal and a channel (for example, a primary synchronization signal (primary synchronization signal, PSS), a secondary synchronization signal (secondary synchronization signal, SSS), a physical broadcast channel (physical broadcast channel, PBCH), a physical control format indicator channel (physical control format indicator channel, PCFICH), a physical hybrid automatic repeat request indicator channel (physical hybrid indicator channel, PHICH), a physical downlink control channel (physical downlink control channel, PDCCH) and a corresponding physical downlink shared channel (physical downlink shared channel, PDSCH) when a system information block (system information block, SIB) is sent, and a PDCCH/PDSCH when a paging message is sent.

(2) A PDCCH (including a PDCCH used for uplink scheduling and a PDCCH used for downlink scheduling) dedicated to the terminal device and a PDSCH corresponding to the PDCCH used for downlink scheduling cannot be transmitted.

(3) A subframe used to transmit a multimedia broadcast and multicast service and positioning reference signal information cannot be configured as an ABS.

(4) The ABS may include a PHICH.

(5) There is no downlink control information format 0 or format 4 (that is, DCI 0 or DCI 4) for uplink scheduling and no scheduled downlink DCI dedicated to the terminal device.

(6) There is no corresponding PDSCH or physical uplink shared channel PUSCH. That is, the ABS includes only some most basic and necessary signals, such as a PSS/SSS, a PBCH, a CRS, paging, and an SIB, and power is very low.

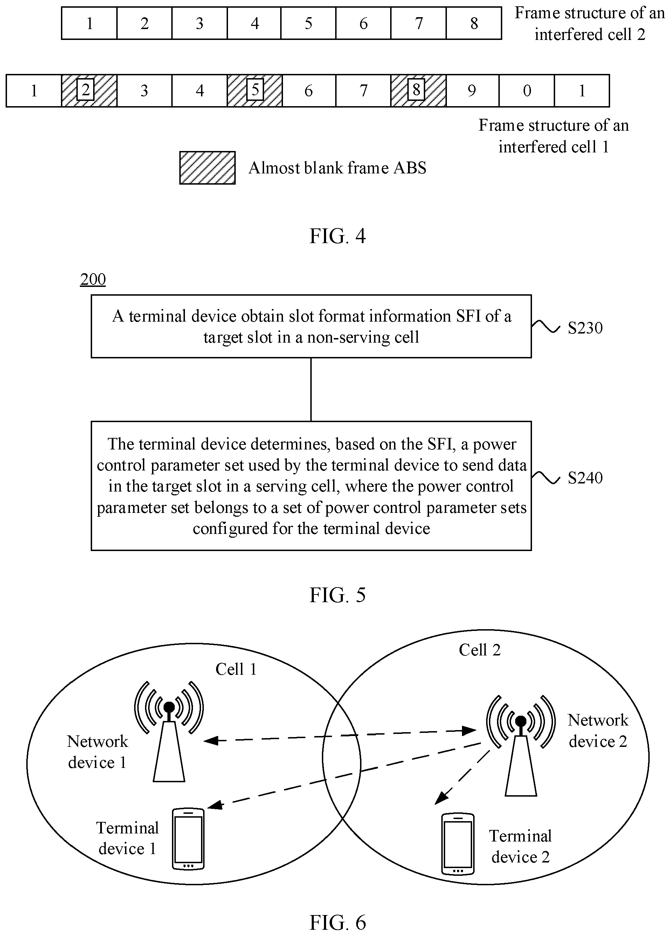

FIG. 4 is a schematic diagram of implementing inter-cell interference coordination by using an ABS. As shown in FIG. 4, ABS are configured in an interfering cell 1 (for example, a non-serving cell), time domain resources on which these ABSs are located are used to send data in an interfered cell 2 (for example, a serving cell), and a service is provided for a user that receives strong interference in the interfered cell 2. In this way, inter-cell interference coordination is implemented. The ABSs are configured through an X2 interface. The serving cell is a cell that serves data transmission for a terminal device. The terminal device may receive and send data on a carrier of the serving cell, or the like. It should be understood that the non-serving cell is a cell other than the serving cell. For the terminal device in the serving cell, the terminal device does not send or receive data in the non-serving cell, but may perform cell search, detection of a synchronization signal block of a cell, measurement of a reference signal, and the like, to obtain a physical cell identifier, timing information, a reference signal-based measurement result, and the like of the non-serving cell.

A frame structure configuration of a cell (including a serving cell and a non-serving cell) is semi-static, that is, the configuration is performed by using higher layer signaling, and an update interval is relatively large, and the configuration is used periodically. The terminal device sends or receives data on a same time-frequency resource (for example, an ABS) at regular intervals on a configured time domain or frequency domain resource.

However, in 5G, a transmission status of a symbol in a slot dynamically changes. If the ABS is still used to resolve an inter-cell interference problem, slot format information that dynamically changes cannot be obtained in a timely manner through interaction between network devices. For example, there may be no ABS configured at a time domain resource location at which an ABS needs to be configured, but an ABS is configured at a time domain resource location at which no ABS needs to be configured. This cannot achieve an objective of reducing inter-cell interference, and further causes a waste of resources, affects normal communication of a user, and causes poor user experience.

Currently, enhanced interference mitigation and service adaptation (enhanced Interference Mitigation and traffic adaptation, eIMTA) may alternatively be used to reduce inter-cell interference. In eIMTA, based on seven uplink-downlink subframe configurations, 10 subframes in a system frame are divided into a subframe set 1 (subframe set 1) and a subframe set 2 (subframe set 2), and two subframe sets are respectively configured with different channel state information (channel state information, CSI) measurement assumptions and power control parameter sets. However, the frame structure configuration of the cell is also semi-static. Therefore, the two subframe sets obtained through division of the system frame cannot meet a requirement of a slot structure that dynamically changes in 5G, and two configured power control parameter sets cannot meet a requirement of a power control parameter set required by a slot format that dynamically changes for the terminal device. Due to a dynamically changing slot format, cross interference in each slot may be different, and may be more difficult to be predicted. Therefore, it is difficult to determine an uplink power control parameter set of an interfering cell in an uplink slot. In addition, the slot format information that dynamically changes cannot be obtained in a timely manner through interaction between network devices, and an objective of reducing inter-cell interference cannot be achieved, seriously affecting normal communication of a user, and causing poor user experience.

Based on the foregoing problem, an embodiment of this application provides a power control method that may be applied to a slot format that dynamically changes. Obtained SFI that dynamically changes in a neighboring cell may be used in determining of an uplink power control parameter set. This helps reduce inter-cell cross interference and improve a system throughput.

First, related terms used in this application are briefly described.

Serving cell: A serving cell is a cell that serves data transmission for a terminal device. The terminal device may receive and send data on a carrier of the serving cell, and the like.

Non-serving cell: Anon-serving cell is a cell other than the serving cell. For the terminal device in the serving cell, the terminal device does not send or receive data in the non-serving cell, but may perform cell search, detection of a synchronization signal block of a cell, measurement of a reference signal, and the like, to obtain a physical cell identifier, timing information, a reference signal-based measurement result, and the like of the non-serving cell.

Target slot: A target slot used in this application may be any slot used by the terminal device to transmit an uplink resource in the serving cell. The terminal device may transmit an uplink resource on one or more symbols in the target slot. A target slot in the non-serving cell and a target slot in the serving cell are a same period of time in absolute time, that is, the target slot is a time domain resource shared by the non-serving cell and the serving cell. Both a terminal device in the non-serving cell and a terminal device in the serving cell may send and receive data on the common target slot resource. Power control parameter set: A power control parameter set may be a group or a set of power control parameters configured by a base station (for example, a base station of the serving cell) for the terminal device, or may be a group or a set of power control parameters that are predefined and then indicated to the terminal device. The power control parameter set includes a plurality of different power control parameters. During sending of uplink data, the terminal device sends, by using different power control parameter sets corresponding to different target slots and by using a related power control parameter in the power control parameter set, data in a symbol that is used for uplink transmission and that is in the target slot. For different statuses of transmission interference (for example, when data transmission performed by the terminal device in the target slot in the serving cell is interfered with by data transmission in the target slot in the non-serving cell), the terminal device may use different uplink power control parameter sets.

Set of power control parameter sets: A set of power control parameter sets is a set including all power control parameter sets.

Subset of the set of power control parameter sets: Power control parameter sets in the set of power control parameter sets are classified based on different application scenarios or service types. A set including each type of power control parameter sets is referred to as a subset of the set of power control parameter sets. That is, the set of power control parameter sets includes one or more subsets of the set of power control parameter sets. Each subset of the set of power control parameter sets includes one or more power control parameter sets.

Transmission status: In the target slot, the terminal device in the serving cell or the terminal device in the non-serving cell transmits a direction in a symbol, for example, uplink transmission on an uplink symbol, downlink receiving on a downlink symbol, or an unknown transmission direction of an unknown symbol.

Transmission conflict: In the target slot, the terminal device in the serving cell and the terminal device in the non-serving cell are on a same symbol. If transmission directions are opposite, it is considered that a transmission conflict occurs.

A power control method provided in this application is described in detail below with reference to FIG. 5. FIG. 5 is a schematic flowchart of a power control method 200 according to an embodiment of this application. The method 200 may be applied to the scenarios shown in FIG. 1 to FIG. 3, and certainly, may also be applied to another communication scenario. This is not limited in this embodiment of this application.

As shown in FIG. 5, the method 200 includes the following steps.

S230. A terminal device obtains slot format information SFI of a target slot in a non-serving cell.

S240. The terminal device determines, based on the SFI, a power control parameter set used by the terminal device to send data in the target slot in a serving cell, where the power control parameter set belongs to a set of power control parameter sets configured for the terminal device.

According to the power control method provided in this application, when a time domain resource conflict exists between the serving cell and the non-serving cell of the terminal device, the terminal device may obtain the slot format information SFI that is of the target slot and that dynamically changes in the non-serving cell. A power control parameter set in the target slot is determined, based on the SFI, in the set of power control parameter sets configured for the terminal device in the target slot in the serving cell. Data is sent in the target slot in the serving cell by using a power control parameter in the power control parameter set. The power control parameter set used by the terminal device in the target slot in the serving cell may be effectively determined by using information about the SFI that dynamically changes in the target slot in the non-serving cell. A status of interference caused by the non-serving cell in the target slot to uplink transmission in the target slot in the serving cell is determined by using the SFI that dynamically changes in the non-serving cell, so that the power control parameter set used by the terminal device in the target slot in the serving cell is further determined based on the status of the interference. Different pieces of SFI correspond to different statuses of interference, and different power control parameter sets are used for different statuses of interference. The SFI that dynamically changes in the target slot of the non-serving cell is flexibly applied. This can improve efficiency and accuracy of determining, by the terminal device, the power control parameter set, further reduce interference caused by the non-serving cell to uplink data transmission of the serving cell on a same time domain resource, improve a system throughput, improve a rate for ensuring normal communication of a user, and improve user experience.

Specifically, in S230, the terminal device obtains the slot format information SFI of the target slot in the non-serving cell. The SFI dynamically changes. The dynamic change may be understood as follows: For example, in a first slot, first five symbols are used for uplink transmission, and last nine symbols are used for downlink transmission. In a second slot, first three symbols are used for uplink transmission, and last 11 symbols are used for downlink transmission. That is, SFI may be different in different slots.

It should be understood that, in the target slot in the serving cell, some symbols may be used for uplink, or all symbols may be used for uplink. The terminal device sends uplink data in the symbol that is used for uplink transmission and that is in the target slot in the serving cell.

FIG. 6 is used as an example for description. FIG. 6 is a schematic diagram of a serving cell and a non-serving cell according to an embodiment of this application. As shown in FIG. 6, a terminal device 1 is located in a cell 1 covered by a network device 1. A terminal device 2 is located in a cell 2 covered by a network device 2. The cell 1 may be referred to as a serving cell of the terminal device 1, and the cell 2 may be referred to as a serving cell of the terminal device 2. For the terminal device 1, the cell 2 is a non-serving cell of the terminal device 1, and for the terminal device 2, the cell 1 is a non-serving cell of the terminal device 2. The terminal device 1 transmits data and the like in the cell 1. The terminal device 2 transmits data and the like in the cell 2. The network device 1 and the network device 2 may obtain configuration information and the like of the cell 1 and the cell 2 through interaction. The terminal device 2 is used as an example for description. A time domain resource of the cell 1 (a non-serving cell) and a time domain resource of the cell 2 (a serving cell) are shared. For example, the terminal device 2 needs to transmit data to the network device 2 in a target slot (any available slot in the shared time domain resource). However, the terminal device 1 may also transmit data to the network device 1 in the target slot. Therefore, on a same time domain resource (a target slot), uplink transmission of the terminal device 1 or downlink sending of the network device 1 causes interference to uplink transmission of the terminal device 2. The interference herein may be understood as a status of interference caused by transmission performed by the terminal device 1 in the cell 1 in the target slot to uplink transmission performed by the terminal device 2 in the cell 2 in the target slot. For example, the terminal device 2 in the cell 2 performs uplink transmission on first five symbols of the target slot. Therefore, a transmission status of the terminal device 1 in the cell 1 on the first five symbols of the target slot needs to be determined, and a status of interference caused by the terminal device 1 in the cell 1 to uplink transmission performed by the terminal device 2 on the first five symbols is determined based on the transmission status of the terminal device 1 in the cell 1 on the first five symbols of the target slot. If the terminal device 1 in the cell 1 performs uplink transmission on all the first five symbols of the target slot, it is considered that there is no interference. If the terminal device 1 in the cell 1 performs downlink transmission on all the first five symbols of the target slot, it is considered that there is interference. If the first five symbols of the target slot are unknown for the terminal device 1 in the cell 1, because an unknown symbol may be used for downlink transmission or may be used for uplink transmission, it is considered that there is potential interference. If the first five symbols of the terminal device 1 in the cell 1 in the target slot include at least one symbol for downlink transmission, it is also considered that there is interference. If the first five symbols of the terminal device 1 in the cell 1 in the target slot include at least one symbol that is unknown, it is also considered that there is potential interference. To reduce impact of data transmission performed by the terminal device 1 in the target slot on data transmission performed by the terminal device 2 in the target slot, the terminal device 2 needs to obtain slot format information SFI of the terminal device in the non-serving cell (the cell 1) in the target slot, and determine, based on the SFI, a status of interference caused by the non-serving cell to the target slot in the serving cell in the target slot, to further determine, based on the status of the interference, a power control parameter set used by the terminal device in the target slot in the serving cell. Different power control parameter sets may be used for different statuses of interference. It should be understood that in NR, a transmission configuration status of a symbol in a slot in a cell dynamically changes. Therefore, the SFI also dynamically changes, that is, SFI may be different in different slots. SFI in different slots of the non-serving cell needs to be obtained in real time.

It should be further understood that the non-serving cell and the serving cell are relative concepts. For example, for the terminal device 1, the cell 2 is a non-serving cell of the terminal device 1. For the terminal device 2, the cell 1 is a non-serving cell of the terminal device 2. The non-serving cell and the serving cell are distinguished by using a cell in which a terminal device is located as a reference.

It should be further understood that FIG. 6 is merely an example. For example, although FIG. 6 is described by using only two cells, a case in which a plurality of cells share a time domain resource may also be applied to the technical solutions of this application. For example, for the terminal device 1, there may be a plurality of non-serving cells. The cell 1 may further include more terminal devices and the like. This is not limited in this embodiment of this application.

In S240, the terminal device determines, based on the SFI, the power control parameter set used by the terminal device to send data in the target slot in the serving cell, where the power control parameter set belongs to the set of power control parameter sets configured for the terminal device. The set of power control parameter sets corresponding to the target slot in the serving cell for the terminal device may be preconfigured. The set of power control parameter sets may include a plurality of subsets, and each subset may include a plurality of power control parameter sets or one power control parameter set. Alternatively, the set of power control parameter sets may include no subset, and a plurality of power control parameter sets or one power control parameter set directly may constitute the set of power control parameter sets. One power control parameter set corresponds to one status of interference, and the terminal device may determine, based on different statuses of interference, different power control parameter sets to be used. The power control parameter set used by the terminal device to send data in the target slot belongs to the set of power control parameter sets. In other words, the set of power control parameter sets includes the power control parameter set. The power control parameter set may be obtained through calculation by using the foregoing formula (1). For example, for a target slot of a terminal device, there may be 32 power control parameter sets, corresponding to different statuses of inter-cell interference and conflicts. However, different power control parameter sets may be used. The 32 power control parameter sets constitute the set of power control parameter sets. Alternatively, the 32 power control parameter sets may be classified, to constitute different subsets of power control parameter sets, and these subsets constitute the set of power control parameter sets. This is not limited in this embodiment of this application. The terminal device determines, in the set of power control parameter sets corresponding to the target slot in the serving cell and based on the SFI that dynamically changes in the non-serving cell, the power control parameter set used by the terminal device to send data in the target slot in the serving cell, that is, determines, in the set of power control parameter sets based on the SFI that dynamically changes in the non-serving cell, the power control parameter set that is in the set and that corresponds to the target slot. The power control parameter set corresponding to the target slot in the serving cell is determined based on the SFI that dynamically changes in real time. That is, a status of interference caused by the non-serving cell in the target slot to transmission performed in the target slot in the serving cell is determined based on the SFI that dynamically changes in the target slot in the non-serving cell. In this way, the power control parameter set used by the terminal device in the target slot in the serving cell is further determined based on the status of the interference. Different power control parameter sets are used for different statuses of interference. The terminal device can more accurately determine different power control parameter sets used for different cases of transmission interference. The SFI that dynamically changes in the non-serving cell is flexibly applied. The status of interference caused by the non-serving cell in the target slot to the target slot in the serving cell is determined by using the SFI that dynamically changes in the non-serving cell, so that the power control parameter set used by the terminal device in the target slot in the serving cell is further determined based on the status of the interference. Use of the power control parameter set can further reduce interference caused by the non-serving cell to data transmission performed by the terminal device in the serving cell, that is, reduce interference caused by the non-serving cell to data transmission in the serving cell on a same time domain resource, thereby improving a system throughput, improving a rate of ensuring normal communication of a user, and improving user experience.

It should be understood that the time domain resource is in a unit of a slot. To be specific, the terminal device obtains the slot format information SFI of the target slot in the non-serving cell. When a subframe or a frame is used as a time domain resource unit, the terminal device may also obtain format information of a subframe or a frame in the non-serving cell. In other words, when another time domain resource is used as a unit, the technical solution of this application may also be applied. This is not limited in this embodiment of this application.

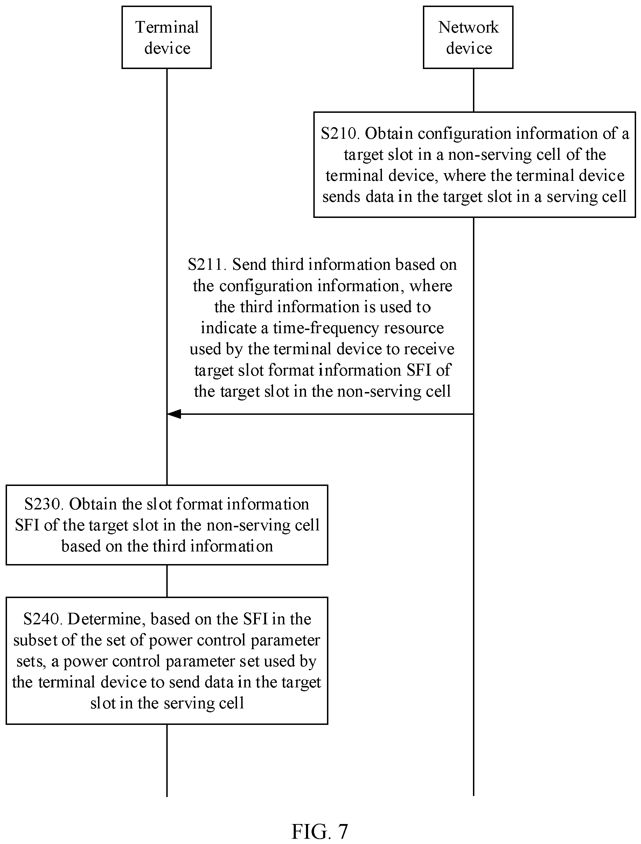

Optionally, in an embodiment, as shown in FIG. 7, the method 200 further includes the following steps.

S210. A network device obtains configuration information of a target slot in a non-serving cell, where a terminal device sends data in the target slot in a serving cell.

S211. The network device sends third information to the terminal device in the serving cell based on the configuration information, where the third information is used to indicate a time-frequency resource used by the terminal device to receive slot format information SFI of the target slot in the non-serving cell. Correspondingly, the terminal device receives the third information.

Specifically, the network device obtains the configuration information of the target slot in the non-serving cell through interaction between network devices. The configuration information includes time-frequency resource information of the SFI of the target slot in the non-serving cell, that is, detection configuration information of the SFI. It should be understood that the network device is a network device in the serving cell of the terminal device. For example, the detection configuration information of the SFI includes information such as an occasion for carrying the SFI (that is, a slot/time domain resource that may be used to detect a GC-PDCCH) and a CORSET of the GC-PDCCH, and an RNTI used to detect the SFI, and these pieces of information are indicated to the terminal device by using the third information. The terminal device receives, on the time-frequency resource indicated by the third information, the slot format information SFI of the target slot in the non-serving cell. In other words, the slot format information SFI of the target slot in the non-serving cell is obtained based on the third information.

Content of the SFI dynamically changes. Therefore, the resource information for detecting the SFI is indicated to the terminal device, so that the terminal device can dynamically obtain the SFI in real time. This improves accuracy and flexibility of the obtained slot format information SFI of the target slot in the non-serving cell, so that the terminal device can more accurately determine the power control parameter set used by the terminal device to send data in the target slot in the serving cell, thereby further reducing interference caused by the non-serving cell to uplink data transmission of the serving cell on a same time domain resource, improving a system throughput, improving a rate for ensuring normal communication of a user, and improving user experience.

It should be understood that in addition to obtaining the slot format information SFI of the target slot in the non-serving cell based on the third information, the terminal device may obtain the slot format information SFI of the target slot in the non-serving cell in another manner. For example, the network device may directly notify the SFI to the terminal device. This is not limited in this embodiment of this application.

Content shown above in FIG. 6 is used an example for description. It is assumed that the terminal device is a terminal device 2, and the terminal device 2 is located in a coverage area of the network device 2. The network device 2 may interact with the network device 1. For the terminal device 2, the cell 2 is a serving cell, and the cell 1 is a non-serving cell. The network device 2 interacts with the network device 1 to obtain detection configuration information of slot format information SFI of the target slot in the cell 1, and then notifies the detection configuration information to the terminal device 2. After obtaining the detection configuration information, the terminal device 2 may perform uplink detection on the SFI of the target slot in the cell 1 on a corresponding time-frequency resource. This improves accuracy and flexibility of the slot format information SFI that is of the target slot in the non-serving cell and that is obtained by the terminal device.

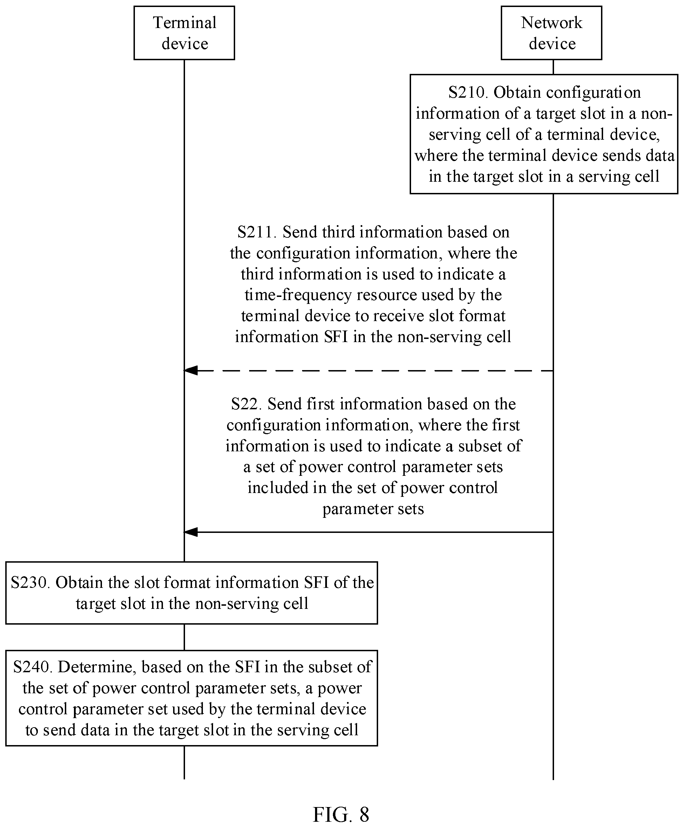

Optionally, in an embodiment, as shown in FIG. 8, the method 200 further includes the following steps.

S220. The network device sends first information to the terminal device based on the configuration information, where the first information is used to indicate a subset of the set of power control parameter sets included in the set of power control parameter sets. Correspondingly, the terminal device receives the first information.

Specifically, in S220, the network device obtains the configuration information of the target slot in the non-serving cell through interaction between network devices. It should be understood that the network device is a network device in the serving cell of the terminal device. The configuration information of the target slot in the non-serving cell may be semi-static configuration information, or may not be semi-static configuration information (that is, may be dynamic configuration information). The following uses an example in which the configuration information of the target slot in the non-serving cell is semi-static configuration information for description.

It should be understood that step S211 indicated by dashed lines shown in FIG. 8 is optional. In other words, in an embodiment, the terminal device may not receive the third information, but receive only the first information. Alternatively, in another embodiment, the terminal device may receive the first information and the third information. This is not limited in this embodiment of this application.

The semi-static configuration information of the target slot in the non-serving cell is used to indicate a transmission status in the target slot in the non-serving cell. It should be understood that the semi-static configuration information is a transmission status in the target slot in the non-serving cell within a period of time, that is, the transmission status in the target slot in the non-serving cell is periodically repeated based on a configured time period. The terminal device sends or receives data on a same time-frequency resource (for example, an ABS) at regular intervals on a configured time domain or frequency domain resource. Content of the semi-static configuration information and that of the foregoing SFI of the non-serving cell are essentially the same, and both indicate the transmission status in the target slot in the non-serving cell. However, the SFI dynamically changes, that is, content of the SFI dynamically changes. For example, the semi-static configuration information may be as follows: In the target slot, first five symbols are used for uplink transmission, and last nine symbols are unknown, and may be used for downlink transmission, or may be used for uplink transmission. The SFI may be as follows: In the target slot, first five symbols are used for uplink transmission, first three of last nine symbols are used for uplink transmission, and last six symbols are used for downlink transmission. That is, the SFI is mainly used to determine uplink and downlink transmission statuses that are of unknown symbols and that are configured in the semi-static configuration information. When symbols in the target slot in the semi-static configuration information include no unknown symbol, the content of the semi-static configuration information should be the same as that of the SFI. The terminal device may choose to use one of the semi-static configuration information and the SFI, and determine the power control parameter set in the target slot in the set of power control parameter sets configured for the terminal device in the target slot in the serving cell.

For example, when transmission statuses that are of symbols of the non-serving cell in the target slot and that are configured in the semi-static configuration information are unknown, these symbols whose transmission statuses are unknown may be used for uplink transmission, or may be used for downlink transmission. That is, the transmission statuses of these unknown symbols cannot be determined by using the semi-static configuration information. However, in 5G, a transmission configuration status of a symbol in a slot dynamically changes. Therefore, the terminal device needs to determine the transmission statuses of these unknown symbols with reference to the SFI that dynamically changes in the non-serving cell, to determine, based on the transmission statuses of these unknown symbols, a status of interference caused by transmission of the non-serving cell in the target slot to uplink transmission of the serving cell in the target slot.

The network device sends first information to the terminal device based on the semi-static configuration information, where the first information is used to indicate a subset of the set of power control parameter sets included in the set of power control parameter sets. Correspondingly, the terminal device receives the first information.

Specifically, the network device determines the transmission status of the symbol in the target slot in the non-serving cell based on the semi-static configuration information, then determines, based on the transmission status of the symbol in the target slot in the non-serving cell, a status of interference caused by transmission of the non-serving cell in the target slot to uplink transmission of the serving cell in the target slot, and sends first information to the terminal device based on the status of the interference, where the first information is used to indicate a subset of the set of power control parameter sets included in the set of power control parameter sets. That is, the network device may determine, in the set of power control parameter sets based on the status of the interference, a power control parameter set or a subset of the set of power control parameter sets that is unlikely or is not to be used by the terminal device in the serving cell. The power control parameter set or the subset of the set of power control parameter sets that is unlikely or is not to be used herein may be understood as follows: The network device excludes a power control parameter set with a relatively large power control parameter based on a status of interference. A larger power control parameter used by the terminal device in the target slot indicates severer interference. Therefore, the network device indicates, to the terminal device, information about a remaining power control parameter set that may be used by the terminal device or information about the subset of the set of power control parameter sets, so that a range of used power control parameter sets determined by the terminal device can be reduced, efficiency of the terminal device in determining a power control parameter set can be improved, resources can be saved, and a time for determining, by the terminal device, the power control parameter set can be reduced, thereby improving communication efficiency and user experience.

Content shown above in FIG. 6 is used an example for description. It is assumed that the terminal device is a terminal device 2, a serving cell is a cell 2, and the terminal device 2 is located in a coverage area of the network device 2. The network device 2 obtains semi-static configuration information of the terminal device 1 in the cell 1 in the target slot by interacting with the network device 1. The semi-static configuration information includes an uplink/downlink transmission status of the terminal device 1 in the target slot in the cell 1, for example, includes uplink, downlink, and unknown. The network device 2 obtains the semi-static configuration information, determines transmission statuses of symbols in the target slot of the terminal device 1 in the cell 1, and then determines, based on the transmission statuses of the symbols in the target slot of the terminal device 1, a transmission status (an uplink transmission status) in the target slot of the terminal device 2, that is, determines a transmission status on a time domain resource of these symbols used for uplink transmission in the target slot of the terminal device 2 and transmission statuses on the time domain resource of these symbols in the cell 1, to determine a status of interference caused by transmission performed by the terminal device 1 in the cell 1 on these uplink symbols to transmission performed by the terminal device 2 in the cell 2 on these uplink symbols. It should be understood that the terminal device 1 in the cell 1 may perform uplink transmission on these uplink symbols, or may perform downlink transmission on these uplink symbols, or may have a transmission status being unknown.

Content shown in FIG. 6 is used as an example for description. It is assumed that a serving cell is a cell 2, and a terminal device 2 in the cell 2 performs uplink transmission on first five symbols of a target slot. Therefore, a transmission status of a terminal device 1 in a non-serving cell 1 on first five symbols of the target slot needs to be determined, and a status of interference caused by the terminal device 1 in the cell 1 to the terminal device 2 on the first five symbols is determined based on the transmission status of the terminal device 1 in the cell 1 on the first five symbols of the target slot. A power control parameter set that cannot be used by the terminal device 2 in the target slot of the cell 2 or a subset of a set of power control parameter sets is determined in the set of power control parameter sets based on the status of the interference. A remaining power control parameter set that may be used or a subset of the set of power control parameter sets is indicated to the terminal device 2 by using first information. Correspondingly, the terminal device 2 receives the first information. In this way, a range of a used power control parameter set determined by the terminal device 2 can be reduced, thereby improving efficiency of the terminal device 2 in determining a power control parameter.

Optionally, in an implementation, in S240, the determining, by the terminal device based on the SFI, a power control parameter set used by the terminal device to send data in the target slot in a serving cell includes:

determining, by the terminal device based on the SFI, in the subset of the set of power control parameter sets, the power control parameter set used by the terminal device to send data in the target slot in the serving cell.

Specifically, because the first information is used to indicate the subset of the set of power control parameter sets included in the set of power control parameter sets, after receiving the first information, the terminal device may determine the subset of the set of power control parameter sets based on the first information, and then determines, based on the SFI, in the subset of the set of power control parameter sets, the power control parameter set used by the terminal device to send data in the target slot in the serving cell. In this way, a range of used power control parameter set determined by the terminal device can be further reduced, thereby improving efficiency of the terminal device in determining a power control parameter set, saving resources, reducing a time for determining, by the terminal device, the power control parameter set, and improving communication efficiency and user experience.

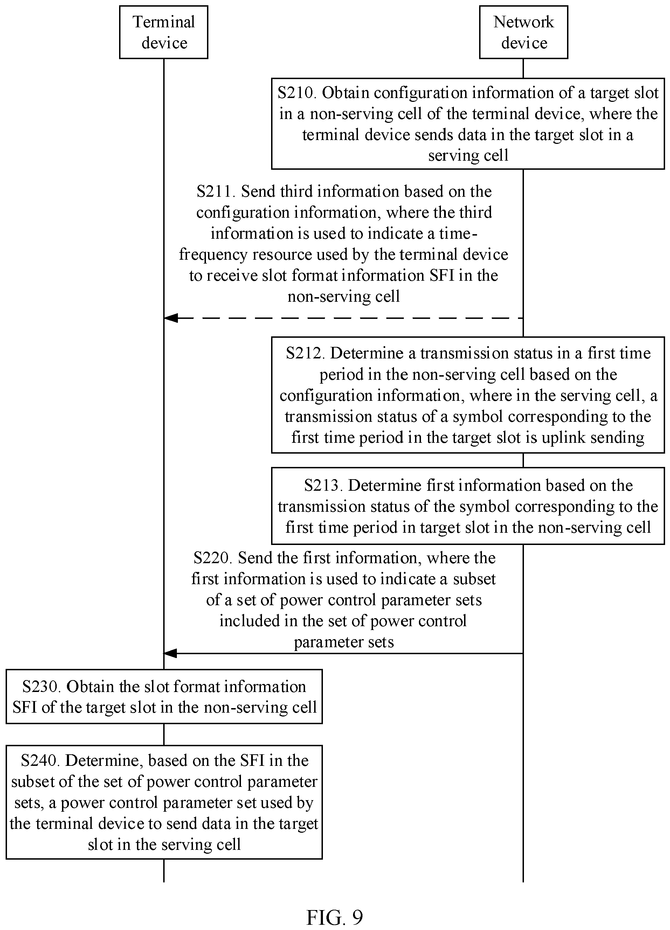

Optionally, in an embodiment, as shown in FIG. 9, the method 200 further includes the following steps.

S212. The network device determines a transmission status in a first time period in the non-serving cell of the terminal device based on the configuration information, where the terminal device is in the serving cell, and a transmission status of a symbol corresponding to the first time period in the target slot is uplink transmission.

S213. The network device determines the first information based on the transmission status of the symbol corresponding to the first time period in the non-serving cell.

Specifically, the network device determines, based on the semi-static information, transmission statuses of symbols corresponding to a first time period of some or all non-serving cells of the terminal device in the target slot, then determines, based on the transmission statuses of the symbols corresponding to the first time period of the non-serving cells in the target slot, a status of interference caused by transmission of the some or all non-serving cells in the target slot to uplink transmission of a corresponding symbol in the target slot in the serving cell, and determines the first information based on the status of the interference. The first time period herein may be understood as a time period or time of a symbol whose transmission status is uplink transmission in the target slot in the serving cell. For example, if symbols for uplink transmission in the target slot in the serving cell are first five symbols, the first time period is the first five symbols of the target slot. Only transmission statuses of the first five symbols of the target slot in the non-serving cell need to be determined, and a status of interference caused by the transmission statuses of the first five symbols of the target slot in the non-serving cell to uplink transmission statuses of the first five symbols of the target slot in the serving cell is determined based on the transmission statuses of the first five symbols of the target slot in the non-serving cell. The network device determines, in the set of power control parameter sets based on the status of the interference, a power control parameter set or a subset of the set of power control parameter sets that is unlikely or is not to be used by the terminal device in the serving cell, then determines a power control parameter set or a subset of the set of power control parameter sets that may be used by the terminal device, and determines the first information based on the power control parameter set or the subset of the set of power control parameter sets that may be used by the terminal device, where the first information is used to indicate the power control parameter set or the subset of the set of power control parameter sets that may be used by the terminal device. In this way, accuracy of the first information can be improved, and a power control parameter set or the subset of the set of power control parameter sets that may be used by the terminal device can be more accurately determined, thereby improving efficiency of the terminal device in determining the used power control parameter set, reducing interference caused by the non-serving cell to uplink data transmission of the serving cell on a same time domain resource, improving efficiency and a capability of interference cancellation, and improving user experience.

It should be understood that step S211 indicated by dashed lines shown in FIG. 9 is optional. In other words, in an embodiment, the terminal device may not receive the third information, but receive only the first information. Alternatively, in another embodiment, the terminal device may receive the first information and the third information. This is not limited in this embodiment of this application.

Optionally, in an embodiment, in S213, the determining, by the network device, the first information based on the transmission status of the symbol corresponding to the first time period in the target slot in the non-serving cell includes:

determining, by the network device, a subset of the set of power control parameter sets based on the transmission statuses of the symbols corresponding to the first time period in the target slots in the some non-serving cells, where the subset of the set of power control parameter sets includes a plurality of power control parameter sets; and determining, by the network device, the first information based on the subset of the set of power control parameter sets.

Specifically, the network device determines, based on the semi-static configuration information of the non-serving cell of the terminal device, transmission statuses of symbols corresponding to the first time period in the target slot in some of a plurality of non-serving cells, that is, the network device may determine downlink transmission (download, DL) and uplink transmission (upload, DL) transmission statuses of some non-serving cells in the target slot. It should be understood that the determining the transmission statuses of the symbols corresponding to the first time period in the target slot in some non-serving cells herein may be understood as determining, in the slots of the some non-serving cells, that the transmission statuses of all the symbols corresponding to the first time period in the target slot are DL or UL. For example, it is assumed that the network device may determine, based on the semi-static configuration information of the non-serving cell 1, that the transmission status of the symbol corresponding to the first time period in the target slot in the non-serving cell 1 is UL or DL, that is, the network device may determine the transmission status of the symbol corresponding to the non-serving cell 1 in the first time period in the target slot. It should be understood that it is assumed that the network device determines, based on the semi-static configuration information of the non-serving cell 1, that in addition to DL or UL, transmission statuses of all of symbols corresponding to the first time period in the target slot in the non-serving cell 1 further include an unknown symbol, that is, the network device cannot determine the transmission status of the symbol corresponding to the first time period in the target slot in the non-serving cell 1, that is, cannot determine transmission statuses of these unknown symbols.

When the network device may determine the transmission statuses of the symbols corresponding to the first time period in the target slot in the some non-serving cells, the network device may determine the subset of the set of power control parameter sets based on the transmission statuses and an uplink transmission status of a symbol corresponding to the first time period in the target slot in the serving cell, that is, determine a potential subset of the set of power control parameter sets. The potential subset of the set of power control parameter sets is a subset that is of the set of power control parameter sets, that may be used by the terminal device, and that is determined by the network device in the set of power control parameter sets based on interference statuses of the serving cell and the non-serving cell in the target slot. The subset of the set of power control parameter sets may include a plurality of power control parameter sets, and certainly, may alternatively include one power control parameter set. The network device determines the first information based on the subset of the set of power control parameter sets, so that a power control parameter set that may be used by the terminal device or the subset of the set of power control parameter sets can be more accurately determined, thereby improving efficiency of the terminal device in determining the power control parameter set, reducing interference caused by the non-serving cell to uplink data transmission of the serving cell on a same time domain resource, and improving efficiency and a capability of interference cancellation. Optionally, in an embodiment, in S213, the determining, by the network device, the first information based on the transmission status of the symbol corresponding to the first time period in the target slot in the non-serving cell includes:

determining, by the network device, a subset of the set of power control parameter sets based on the transmission statuses of the symbols corresponding to the first time period in the target slot in all the non-serving cells; and
determining, by the network device, the first information based on the subset of the set of power control parameter sets.

Specifically, the network device determines, based on the semi-static configuration information of the non-serving cell of the terminal device, transmission statuses of symbols corresponding to the first time period in the target slot in all non-serving cells, that is, the network device may determine downlink (downlink, DL) and uplink (uplink, DL) transmission statuses of symbols corresponding to the first time period in the target slot in all non-serving cells. When the network device can determine transmission statuses of symbols corresponding to the first time period in the target slot in all non-serving cells, the network device may determine the subset of the set of power control parameter sets based on the transmission statuses of the symbols corresponding to the first time period in the target slot in all the non-serving cells and an uplink transmission status in the first time period in the target slot in the serving cell. The network device determines the first information based on the subset of the set of power control parameter sets, so that a power control parameter set that may be used by the terminal device or the subset of the set of power control parameter sets can be more accurately determined, thereby improving efficiency of the terminal device in determining the power control parameter set to be used, reducing interference caused by the non-serving cell to uplink data transmission of the serving cell on a same time domain resource, and improving efficiency and a capability of interference cancellation.

It should be understood that when the network device may determine transmission statuses of symbols corresponding to the first time period in the target slot in all non-serving cells, the subset herein may include only one determined power control parameter set. In other words, the network device directly notifies the determined power control parameter set to the terminal device by using the first information, and the terminal device may directly use the power control parameter set to send uplink data in the target slot in the serving cell. In this case, the terminal device may not need to obtain slot format information SFI of the target slot in the non-serving cell, that is, may not need to detect the SFI that dynamically changes in the target slot in the non-serving cell, but directly use the power control parameter set indicated by the network device, without needing to select one from the set of power control parameter sets. Certainly, after receiving the power control parameter set notified by the network device, the terminal device may alternatively obtain slot format information SFI of the target slot in the non-serving cell, and verify whether the transmission status of the symbol corresponding to the first time period in the target slot in the non-serving cell includes only DL and/or UL and no unknown symbol. That is, double assurance is implemented. If a verification result is that the transmission status includes only DL and/or UL, the power control parameter set indicated by the network device may be used. If a verification result is that the transmission status further includes an unknown symbol in addition to DL and/or UL, the terminal device may ignore the power control parameter set indicated by the network device, and determines a to-be-used power control parameter set in the configured set of power control parameter sets with reference to the slot format information SFI of the target slot in the non-serving cell. This is not limited in this embodiment of this application.

It should be further understood that when the network device may determine transmission statuses of symbols corresponding to the first time period in the target slot in all non-serving cells, the subset herein may alternatively include a plurality of possible power control parameter sets. The network device determines, in the subset of the set of power control parameter sets based on the obtained slot format information SFI of the target slot in the non-serving cell, the power control parameter set used by the terminal device to send data in the target slot in the serving cell. This is not limited in this embodiment of this application.

Optionally, when the network device cannot determine, based on the semi-static configuration information, transmission statuses of all symbols corresponding to the first time period in the target slot in all non-serving cells of the terminal device, that is, all symbols corresponding to the first time period in the target slot in all non-serving cells of the terminal device are unknown, the network device may not send the first information to the terminal device. The terminal device determines, based on a preconfigured set of power control parameter sets, in the set of power control parameter sets, and with reference to the obtained slot format information SFI of the target slot in the non-serving cell, the power control parameter set used by the terminal device to send data in the target slot in the serving cell. This is not limited in this embodiment of this application.

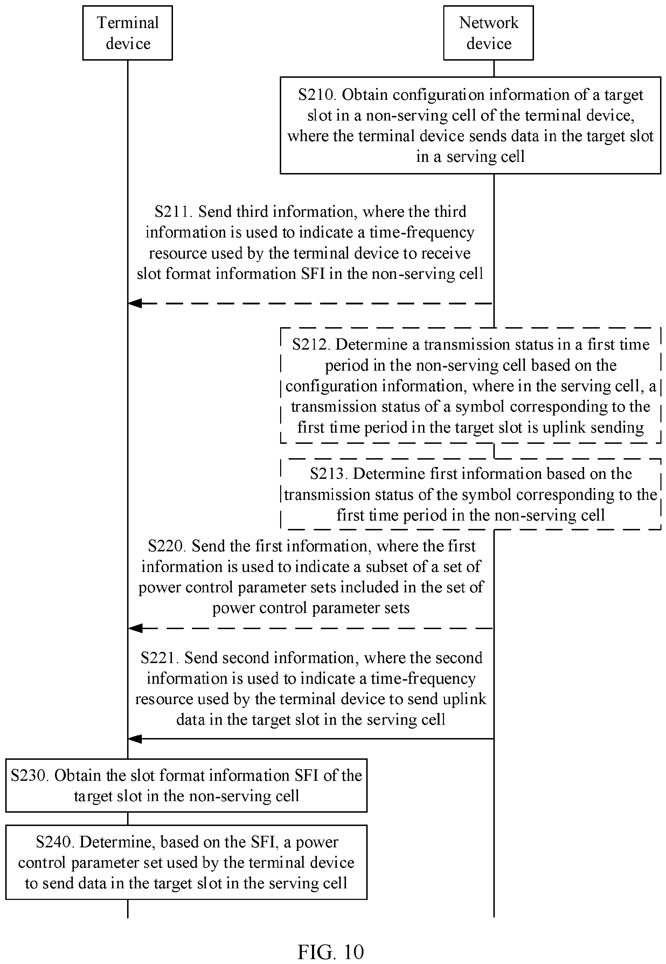

Optionally, in an embodiment, as shown in FIG. 10, the method 200 further includes the following steps.

S221. The network device sends second information to the terminal device, where the second information is used to indicate a time domain resource used by the terminal device to send uplink data in the target slot in the serving cell. Correspondingly, the terminal device receives the second information.

Correspondingly, in S240, the terminal device further determines, based on the time domain resource and a slot format SFI of the target slot in the non-serving cell, the power control parameter set used by the terminal device to send data in the target slot in the serving cell.

Specifically, in S221, the network device may further send second information to the terminal device, where the second information is used to indicate a time domain resource used by the terminal device to send uplink data in the target slot in the serving cell. For example, for a PUSCH, the second information may be indication information in uplink scheduling (UL Grant), and is used to a location of a time domain resource used by the terminal device to send uplink data in the target slot in the serving cell. For example, the second information may be that in a fifth slot, first five symbols are used for uplink transmission, and last 9 symbols are used for downlink transmission. That is, the terminal device may perform uplink transmission on a time domain resource of the first five symbols. Alternatively, for a PUCCH, the network device may determine, based on configuration information of the PUCCH, a location of a time domain resource for sending the PUCCH, that is, determine the second information, and send the second information to the terminal device.

After determining, based on the second information, the time domain resource used by the terminal device to send uplink data in the target slot in the serving cell, the terminal device determines, with reference to the slot format information SFI of the target slot in the non-serving cell, the power control parameter set used by the terminal device to send data in the target slot in the serving cell.

An example is used for description. For example, it is determined, based on the second information, that for the terminal device, in a fifth slot (the target slot) of the serving cell, first five symbols are used for uplink transmission, and last 9 symbols are used for downlink transmission. Therefore, transmission statuses of the symbols in the fifth slot in the non-serving cell need to be determined. That is, when the terminal device performs uplink transmission in the serving cell, a transmission direction in the symbols for uplink transmission (the first five symbols) in the fifth slot in the non-serving cell needs to be determined. The network device determines, in the set of power control parameter sets based on the time domain resource indicated by the second information and the slot format information SFI of the target slot in the non-serving cell, the power control parameter set used by the terminal device to send data in the target slot in the serving cell.

The network device notifies, to the terminal device by using indication information, the time domain resource used by the terminal device to send the uplink data in the target slot in the serving cell, so that the terminal device can more accurately determine a transmission status of the target slot in the serving cell, more accurately determine a status of interference from the non-serving cell, and more accurately determine the power control parameter set that needs to be used, thereby improving efficiency and accuracy of the terminal device in determining the power control parameter set to be used, reducing interference of the non-serving cell to uplink data transmission of the serving cell on a same time domain resource, improving efficiency and a capability of interference cancellation, and improving user experience.

It should be understood that steps indicated by dashed lines in FIG. 10 are optional steps. For example, in an implementation, the terminal device may not receive the third information and the first information, but receive only the second information. Alternatively, in an implementation, the terminal device may receive the third information and the second information. Alternatively, in an implementation, the terminal device may receive the first information, the second information, and the third information.

For another example, in an implementation, the terminal device receives the first information and the second information, and determines, in the subset of the set of power control parameter sets based on the second information sent by the network device, and with reference to the first information that is sent by the network device and that is used to indicate the subset of the set of power control parameter sets, the power control parameter set used by the terminal device to send data in the target slot in the serving cell. This is not limited in this embodiment of this application.

In S240, the determining, by the terminal device based on the SFI, a power control parameter set used by the terminal device to send data in the target slot in a serving cell includes:
determining, by the terminal device based on the transmission status of the symbol corresponding to the first time period in the target slot in the non-serving cell, the power control parameter set used by the terminal device to send data on the corresponding symbol in the target slot in the serving cell, where the transmission status of the symbol corresponding to the first time period in the target slot in the serving cell is uplink transmission.

Specifically, the transmission status of the symbol corresponding to the first time period in the target slot in the non-serving cell may be as follows: All of symbols corresponding to the first time period are for downlink transmission, or all of symbols corresponding to the first time period are for uplink transmission, or all of symbols corresponding to the first time period are unknown, or transmission statuses of symbols corresponding to the first time period include a combination of any two or three of uplink transmission, downlink transmission, and unknown. The transmission status of the symbol corresponding to the first time period in the target slot in the serving cell is uplink transmission.

For example, if symbols for uplink transmission in the target slot in the serving cell are first five symbols, the first time period is the first five symbols of the target slot. Only transmission statuses of the first five symbols of the target slot in the non-serving cell need to be determined, and a status of interference caused by the transmission statuses of the first five symbols of the target slot in the non-serving cell to uplink transmission statuses of the first five symbols of the target slot in the serving cell is determined based on the transmission statuses of the first five symbols of the target slot in the non-serving cell. The power control parameter set used by the terminal device to send data in the target slot in the serving cell is determined based on the status of the interference. That is, the time domain resource for uplink transmission in the target slot in the serving cell is compared with a transmission status on a location of the same time domain resource in the non-serving cell, to determine the power control parameter set used by the terminal device to send data in the target slot in the serving cell, so that the power control parameter set used by the terminal device can be more accurately determined, thereby improving efficiency and accuracy of the terminal device in determining the to-be-used power control parameter set.

Optionally, in S240, the determining, by the terminal device based on the transmission status of the symbol corresponding to the first time period in the target slot in the non-serving cell, the power control parameter set used by the terminal device to send data in the symbol corresponding to the first time period in the target slot in the serving cell includes:

determining, by the terminal device, a quantity of non-serving cells in which uplink transmission conflicts with the transmission status of the symbol corresponding to the first time period in the target slot; and
determining, by the terminal device based on a relationship between the quantity of conflicting non-serving cells and the quantity of non-serving cells, in the set of power control parameter sets configured for the terminal device, the power control parameter set used by the terminal device to send data in the symbol corresponding to the first time period in the target slot in the serving cell.

Specifically, the set of power control parameter sets may include a plurality of power control parameter sets or one power control parameter set, and each power control parameter set is associated with one cross-link interference (cross-link interference, CLI) type. For example, the plurality of power control parameter sets included in the set of power control parameter sets may be numbered. That the set of power control parameter sets includes three power control parameter sets is used as an example for description. The three power control parameter sets are sequentially a power control parameter set 1, a power control parameter set 2, and a power control parameter set 3. It is assumed that the terminal device performs uplink transmission on first five symbols of the target slot in the serving cell. In this case, the power control parameter set 1 is applicable to a case in which the terminal device performs downlink transmission on the first five symbols of the target slot in the non-serving cell, that is, there is a transmission direction conflict. The power control parameter set 2 is applicable to a case in which the terminal device performs uplink transmission on the first five symbols of the target slot in the non-serving cell, that is, there is no transmission direction conflict. The power control parameter set 3 is applicable to a case in which the first five symbols of the target slot in the non-serving cell are unknown for the terminal device, that is, there is a potential transmission direction conflict because an unknown symbol may be used for uplink transmission or may be used for downlink transmission.

It should be understood that the transmission direction conflict herein may be understood as follows: In the serving cell, the transmission status of the symbol corresponding to the first time period in the target slot is uplink transmission, and when the transmission status of the symbol corresponding to the first time period in the target slot in the non-serving cell is downlink transmission, it is considered that there is a transmission direction conflict.

It should be further understood that when the transmission status of the symbol corresponding to the first time period of the non-serving cell in the target slot is unknown, because the unknown symbol may be used for downlink transmission, it may also be considered that a transmission direction conflict occurs.

In a plurality of non-serving cells, when transmission statuses of symbols corresponding to the first time period in the target slot in some non-serving cells are unknown, and transmission statuses of symbols corresponding to the first time period in the target slot in some non-serving cells are downlink, a quantity of non-serving cells whose transmission directions conflict is a sum of a quantity of the non-serving cells in which the transmission statuses of the symbols corresponding to the first time period in the target slot are unknown and a quantity of the non-serving cells in which the transmission statuses of the symbols corresponding to the first time period in the target slot are downlink.

An example is provided below for description.

Assuming that there are N non-serving cells in total, the terminal device determines, in the N non-serving cells based on SFIs of symbols corresponding to the first time period in the target slot in the N non-serving cells, that transmission directions of symbols corresponding to the first time period of in the target slot of M non-serving cells conflict with transmission directions of symbols corresponding to the first time period of in the target slot in the serving cell. The terminal device may determine, based on a relationship between N and M, the power control parameter set used by the terminal device to send data in the symbol corresponding to the first time period in the target slot in the serving cell. For example, when $N \geq 1$, $M \geq 1$, and $N \geq M$, that is, there is cross interference, it is determined to use a power control parameter set 1. When $N \geq 1$, M=0, and the transmission status of the symbol corresponding to the first time period in the target slot of the terminal device in the non-serving cell is uplink transmission, that is, there is no cross interference, it is determined to use a power control parameter set 2. When $N \geq 1$, M=0, and the transmission status of the symbol corresponding to the first time period in the target slot of the terminal device in the non-serving cell is unknown, that is, there is a potential conflict, it is determined to use a power control parameter set 3.

It should be understood that, if a case in which the transmission status of the symbol corresponding to the first time period in the target slot in the non-serving cell is unknown is a transmission direction conflict, a power control parameter set may be determined according to the foregoing similar method based on a relationship between a total quantity of non-serving cells and a sum of a quantity of non-serving cells whose transmission statuses are unknown and a quantity of non-serving cells whose transmission statuses are downlink transmission. This is not limited in this embodiment of this application.

The terminal device determines, by using a relationship between the quantity of conflicting non-serving cells and the quantity of non-serving cells, the power control parameter set used by the terminal device to send data in the target slot in the serving cell. In this way, the power control parameter set for sending data in the target slot in the serving cell can be quickly determined, thereby improving accuracy and efficiency of determining the power control parameter set, and improving communication efficiency and user experience.

It should be understood that a relationship between M, N, and a power control (power control, PC) parameter set (parameters set) may alternatively be a function relationship, to be specific, power control parameters set = f(M, N). That is, M and N are used as input parameters of a function for determining a power control parameter set, and the terminal device determines a specifically used power control parameter set based on the function relationship. For example, f(M, N) is a segmentation function. Each segmentation interval may correspond to one power control parameter set based on a ratio of N to M. If there are Q power control parameter sets, f(M, N) may be a phase function with Q different values. It should be understood that f(M, N) may be in any possible function form. This is not limited in this embodiment of this application.

It should be further understood that, in addition to determining, based on the foregoing relationship between the quantity of conflicting non-serving cells and the quantity of non-serving cells, the power control parameter set used by the terminal device to send data in the target slot in the serving cell, the terminal device may further determine the power control parameter set in any other feasible manner. This is not limited in this embodiment of this application.

It should be understood that in the embodiments of this application, the first, the second, the third, and the like are merely intended to indicate that a plurality of objects are different. For example, first information and second information are merely used to indicate different information, and should not impose an impact on the information. First, second, and the like described above should not impose any limitation on the embodiments of this application.

It should be further understood that, in the embodiments of this application, the first information may be carried in signaling that is sent by any network device to the terminal device, for example, carried in uplink scheduling information that is sent by the network device to the terminal device. Similarly, the second information and the third information may alternatively be carried in signaling that is sent by any network device to the terminal device. In other words, in the embodiments of this application, specific forms of the first information, the second information, and the third information are not limited.

It should be further understood that, the foregoing is merely intended to help a person skilled in the art better understand the embodiments of this application, rather than limit the scope of the embodiments of this application. Apparently, a person skilled in the art may make various equivalent modifications or changes according to the foregoing examples, or may add some new steps, or a combination of any two or more of the foregoing embodiments. Such modified, changed, or combined solutions also fall within the scope of the embodiments of this application.

It should be understood that sequence numbers of the foregoing processes do not mean execution sequences. The execution sequences of the processes should be determined according to functions and internal logic of the processes, and should not be construed as any limitation on the implementation processes of the embodiments of this application.

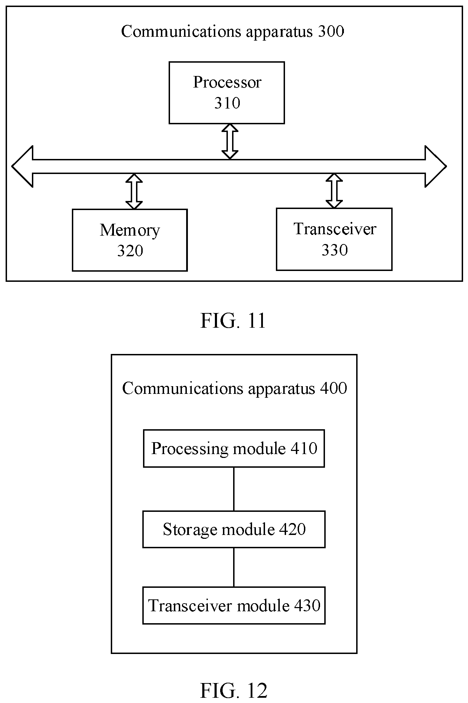

With reference to FIG. 1 to FIG. 10, the foregoing describes in detail the power control method according to the embodiments of this application. With reference to FIG. 11 to FIG. 14, the following describes in detail a communications apparatus according to the embodiments of this application.

FIG. 11 is a schematic block diagram of a communications apparatus according to an embodiment of this application. It should be understood that the communications apparatus may refer to the foregoing terminal device. Communications apparatus embodiment corresponds to the method embodiments. For similar descriptions, refer to the method embodiments. The communications apparatus 300 shown in FIG. 11 may be configured to perform steps performed by the terminal device in FIG. 5 and FIG. 7 to FIG. 10. The communications apparatus 300 includes a processor 310, a memory 320, and a transceiver 330. The processor 310, the memory 320, and the transceiver 330 are connected through communication. The memory 320 stores an instruction. The processor 310 is configured to execute the instruction stored in the memory 320. The transceiver 330 is configured to perform specific signal receiving and sending as driven by the processor 310.

The processor 310 is configured to obtain slot format information SFI of a target slot in a non-serving cell.

The processor 310 is further configured to determine, based on the SFI, a power control parameter set used by the terminal device to send data in the target slot in a serving cell, where the power control parameter set belongs to a set of power control parameter sets configured for the terminal device.

According to the communications apparatus provided in this embodiment of this application, when a time domain resource conflict exists between the serving cell and the non-serving cell of the terminal device, the terminal device may obtain the slot format information SFI that is of the target slot and that dynamically changes in the non-serving cell. A power control parameter set in the target slot is determined, based on the SFI, in the set of power control parameter sets configured for the terminal device in the target slot in the serving cell. Data is sent in the target slot in the serving cell by using a power control parameter in the power control parameter set. The power control parameter set used by the terminal device in the target slot in the serving cell may be effectively determined by using information about the SFI that dynamically changes in the target slot in the non-serving cell. The SFI that dynamically changes in the target slot of the non-serving cell is flexibly applied. This can improve efficiency and accuracy of determining, by the terminal device, the power control parameter set, further reduce interference caused by the non-serving cell to uplink data transmission of the serving cell on a same time domain resource, improve a system throughput, improve a rate for ensuring normal communication of a user, and improve user experience. Components in the communications apparatus 300 are connected through communication, that is, the processor 310, the memory 320, and the transceiver 330 communicate with each other and transfer a control and/or data signal between each other by using an internal connection path. The foregoing method embodiments of this application may be applied to the processor, or the processor implements the steps of the foregoing method embodiments. The processor may be an integrated circuit chip and has a signal processing capability. In an implementation process, the steps in the foregoing method embodiments can be implemented by using a hardware integrated logical circuit in the processor, or by using instructions in a form of software. The processor may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), or a field programmable gate array (field programmable gate array, FPGA) or another programmable logic device, a discrete gate or a transistor logic device, or a discrete hardware component. It may implement or perform the methods, the steps, and logical block diagrams that are disclosed in this application. The general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

Optionally, in another embodiment of this application, the transceiver 330 is configured to receive first information sent by a network device, where the first information is used to indicate a subset of the set of power control parameter sets; and the processor 310 is specifically configured to determine, based on the SFI, in the subset of the set of power control parameter sets, the power control parameter set used by the terminal device to send data in the target slot in the serving cell.

Optionally, in another embodiment of this application, the transceiver 330 is further configured to receive second information sent by the network device, where the second information is used to indicate a time domain resource used by the terminal device to send data in the target slot in the serving cell; and The processor 310 is further configured to further determine, based on the time domain resource, a power control parameter set used by the terminal device to send the data in the target slot in the serving cell.

Optionally, in another embodiment of this application, in the serving cell, a transmission status of a symbol corresponding to a first time period in the target slot is uplink transmission, and the processor 310 is specifically configured to: determine, based on the transmission status of the symbol corresponding to the first time period in the target slot in the non-serving cell, a power control parameter set used by the terminal device to send data in the symbol corresponding to the first time period in the target slot in the serving cell.

Optionally, in another embodiment of this application, the processor 310 is specifically configured to: determine, based on a relationship between the quantity of non-serving cells and a quantity of non-serving cells in which uplink transmission conflicts with the transmission status of the symbol corresponding to the first time period in the target slot in the non-serving cell, in the set of power control parameter sets configured for the terminal device, the power control parameter set used by the terminal device to send data in the symbol corresponding to the first time period in the target slot in the serving cell.

Optionally, in another embodiment of this application, the transceiver 330 is further configured to: receive third information sent by the network device, where the third information is used to indicate a time-frequency resource used by the terminal device to receive the SFI of the target slot in the non-serving cell; and receive, on the time-frequency resource indicated by the third information, the slot format information SFI of the target slot in the non-serving cell.

It should be noted that in this embodiment of this application, the processor 310 may be implemented by a processing module, the memory 320 may be implemented by a storage module, and the transceiver 330 may be implemented by a transceiver module. As shown in FIG. 12, a communications apparatus 400 may include a processing module 410, a storage module 420, and a transceiver module 430.

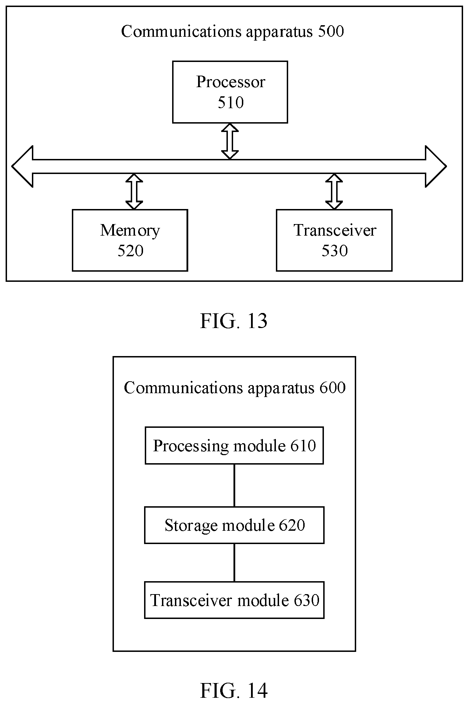

The communications apparatus 300 shown in FIG. 11 or the communications apparatus 400 shown in FIG. 12 can implement the steps performed by the terminal device in FIG. 5 and FIG. 7 to FIG. 10. To avoid repetition, details are not described herein again. FIG. 13 is a schematic block diagram of a communications apparatus 500 according to an embodiment of this application. It should be understood that the communications apparatus embodiments and the method embodiments correspond to each other. For similar descriptions, refer to the method embodiments. The communications apparatus 500 shown in FIG. 13 may be configured to perform the steps performed by the network device in FIG. 7 to FIG. 10. As shown in FIG. 13, the communications apparatus 500 includes a processor 510, a memory 520, and a transceiver 530. The processor 510, the memory 520, and the transceiver 530 are connected through communication. The memory 520 stores an instruction. The processor 510 is configured to execute the instruction stored in the memory 520. The transceiver 530 is configured to perform specific signal receiving and sending as driven by the processor 510.

The processor 510 is configured to obtain configuration information of a target slot in a non-serving cell of a terminal device. The transceiver 530 is configured to send third information to the terminal device in a serving cell based on the configuration information, where the third information is used to indicate a time-frequency resource used by the terminal device to receive slot format information SFI of the target slot in the non-serving cell.

Based on the communications apparatus provided in this embodiment of this application, the resource information for detecting the SFI is indicated to the terminal device, so that the terminal device can dynamically obtain the SFI in real time. This improves accuracy and flexibility of the obtained slot format information SFI of the target slot in the non-serving cell, so that the terminal device can more accurately determine the power control parameter set used by the terminal device to send data in the target slot in the serving cell, further reduce interference caused by the non-serving cell to uplink data transmission of the serving cell on a same time domain resource, improve a system throughput, improve a rate for ensuring normal communication of a user, and improve user experience.

Components in the communications apparatus 500 are connected through communication, that is, the processor 510, the memory 520, and the transceiver 530 communicate with each other and transfer a control and/or data signal between each other by using an internal connection path. The foregoing method embodiments of this application may be applied to the processor, or the processor implements the steps of the foregoing method embodiments. The processor may be an integrated circuit chip and has a signal processing capability. In an implementation process, the steps in the foregoing method embodiments can be implemented by using a hardware integrated logical circuit in the processor, or by using instructions in a form of software. The processor may be a CPU, a network processor NP, or a combination of a CPU and an NP, a DSP, an ASIC, an FPGA or another programmable logic device, a discrete gate or a transistor logic device, or a discrete hardware component. It may implement or perform the methods, the steps, and logical block diagrams that are disclosed in this application. The general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

Optionally, in another embodiment of this application, the transceiver 530 is further configured to send first information to the terminal device based on the configuration information, where the first information is used to indicate a subset that is of a set of power control parameter sets and that is included in the set of power control parameter sets, and the target slot in the serving cell corresponds to the set of power control parameter sets.

Optionally, in another embodiment of this application, a transmission status of a symbol corresponding to a first time period in the target slot in the serving cell is uplink transmission, and the processor 510 is configured to determine, based on the configuration information, a transmission status of a symbol corresponding to the first time period in the target slot in the non-serving cell; and determine the first information based on the transmission status of the symbol corresponding to the first time period in the target slot in the non-serving cell.

Optionally, in another embodiment of this application, the processor 510 is specifically configured to determine a subset of the set of power control parameter sets based on transmission statuses of symbols corresponding to some non-serving cells in the first time period in the target slot in the non-serving cell, where the subset of the set of power control parameter sets includes a plurality of power control parameter sets; and determine the first information based on the subset of the set of power control parameter sets.

Optionally, in another embodiment of this application, the processor 510 is specifically configured to determine a subset of the set of power control parameter sets based on transmission statuses of all symbols corresponding to the first time period in the target slot in the non-serving cell; and determine the first information based on the subset of the set of power control parameter sets.

Optionally, in another embodiment of this application, the transceiver 530 is further configured to send second information to the terminal device, where the second information is used to indicate a time domain resource used by the terminal device to send uplink data in the target slot in the serving cell.

It should be noted that in this embodiment of the present invention, the processor 510 may be implemented by a processing module, the memory 520 may be implemented by a storage module, and the transceiver 530 may be implemented by a transceiver module. As shown in FIG. 14, a communications apparatus 600 may include a processing module 610, a storage module 620, and a transceiver module 630.

The communications apparatus 500 shown in FIG. 13 or the communications apparatus 600 shown in FIG. 14 can implement the steps performed by the network device in FIG. 7 to FIG. 10. To avoid repetition, details are not described herein again.

An embodiment of this application further provides a computer-readable medium, configured to store computer program code. The computer program includes an instruction used to perform the power control methods in the embodiments of this application in FIG. 5, and FIG. 7 to FIG. 10. The readable medium may be a read-only memory (read-only memory, ROM) or a random access memory (random access memory, RAM). This is not limited in this embodiment of this application.

An embodiment of this application further provides a communications system. The communications system includes the communications apparatus provided in the foregoing embodiments of this application, and the communications system can complete any data transmission method provided in the embodiments of this application, and can be applicable to a slot format that dynamically changes. Obtained SFI that dynamically changes in a neighboring cell may be used in determining of an uplink power control parameter set. This helps reduce inter-cell cross interference and improve a system throughput.

An embodiment of this application further provides a system chip, and the system chip includes a processing unit and a communications unit. The processing unit may be, for example, a processor, and the communications unit may be, for example, an input/output interface, a pin, or a circuit. The processing unit may execute a computer instruction, so that a chip in the terminal performs the power control method according to any one of the implementations of the first aspect.

Optionally, the computer instruction is stored in a storage unit.

Optionally, the storage unit may be a storage unit inside the chip, such as a register or a cache. Alternatively, the storage unit may be a storage unit that is inside the terminal and that is located outside the chip, such as a ROM, another type of static storage device that can store static information and instructions, or a RAM. The processor mentioned above may be a CPU, a microprocessor, an ASIC, or one or more integrated circuits configured to control program execution of the foregoing power control methods.

It should be understood that, the term "and/or" and "at least one of A or B" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Therefore, the protection scope of this application shall be subject to the protection scope of the claims.

**Claims**

1. A power control method (200), comprising:

   obtaining (S230), by a terminal device, slot format information, SFI, of a target slot in a non-serving cell; and
   determining (S240), by the terminal device based on the SFI, a power control parameter set used by the terminal device to send data in the target slot in a serving cell, wherein the power control parameter set belongs to a set of power control parameter sets configured for the terminal device.

2. The method (200) according to claim 1, wherein the method (200) further comprises:

   receiving, by the terminal device, first information sent by a network device, wherein the first information is used to indicate a subset of the set of power control parameter sets; and
   the determining (S240), by the terminal device based on the SFI, a power control parameter set used by the terminal device to send data in the target slot in a serving cell comprises:
   determining, by the terminal device based on the SFI, in the subset of the set of power control parameter sets, the power control parameter set used by the terminal device to send data in the target slot in the serving cell.

3. The method (200) according to claim 1 or 2, wherein the method (200) further comprises:

   receiving, by the terminal device, second information sent by the network device, wherein the second information is used to indicate a time domain resource used by the terminal device to send data in the target slot in the serving cell; and
   further determining, by the terminal device based on the time domain resource, the power control parameter set used by the terminal device to send data in the target slot in the serving cell.

4. The method (200) according to any one of claims 1 to 3, wherein in the serving cell, a transmission status of a symbol corresponding to a first time period in the target slot is uplink transmission, and
   the determining (S240), by the terminal device based on the SFI, a power control parameter set used by the terminal device to send data in the target slot in a serving cell comprises:

determining, by the terminal device based on the transmission status of the symbol corresponding to the first time period in the target slot in the non-serving cell, a power control parameter set used by the terminal device to send data in the symbol corresponding to the first time period in the target slot in the serving cell.

5. The method (200) according to claim 4, wherein the determining, by the terminal device based on the transmission status of the symbol corresponding to the first time period in the target slot in the non-serving cell, a power control parameter set used by the terminal device to send data in the symbol corresponding to the first time period in the target slot in the serving cell comprises:
determining, by the terminal device based on a relationship between a quantity of non-serving cells and a quantity of non-serving cells in which uplink transmission conflicts with the transmission status of the symbol corresponding to the first time period in the target slot in the non-serving cell, in the set of power control parameter sets configured for the terminal device, the power control parameter set used by the terminal device to send data in the symbol corresponding to the first time period in the target slot in the serving cell.

6. The method (200) according to any one of claims 1 to 5, wherein the method (200) further comprises:

receiving, by the terminal device, third information sent by the network device, wherein the third information is used to indicate a time-frequency resource used by the terminal device to receive the SFI of the target slot in the non-serving cell; and
receiving, by the terminal device on the time-frequency resource indicated by the third information, the SFI of the target slot in the non-serving cell.

7. A communications apparatus, comprising a processor coupled to a memory, wherein the memory is configured to store an instruction, and the processor is configured to execute the instruction stored in the memory to implement the method according to any one of claims 1 to 6.

8. A computer-readable storage medium, configured to store a computer program, wherein the computer program is configured to execute an instruction of the method according to any one of claims 1 to 6.

**Patentansprüche**

1. Leistungssteuerungsverfahren (200), umfassend:

Erlangen (S230), durch eine Endgerätvorrichtung, von Schlitzformatinformationen, SFI, eines Zielschlitzes in einer Nicht-Serving-Zelle; und
Bestimmen (S240), durch die Endgerätvorrichtung basierend auf den SFI, eines durch die Endgerätvorrichtung verwendeten Leistungssteuerungsparametersatzes zum Senden von Daten in dem Zielschlitz in einer Serving-Zelle, wobei der Leistungssteuerungsparametersatz zu einem für die Endgerätvorrichtung konfigurierten Satz von Leistungssteuerungsparametersätzen gehört.

2. Verfahren (200) nach Anspruch 1, wobei das Verfahren (200) ferner umfasst:

Empfangen, durch die Endgerätvorrichtung, von durch eine Netzwerkvorrichtung gesandten ersten Informationen, wobei die ersten Informationen verwendet werden, einen Teilsatz des Satzes von Leistungssteuerungsparametersätzen anzugeben; und
das Bestimmen (S240), durch die Endgerätvorrichtung basierend auf den SFI, eines durch die Endgerätvorrichtung verwendeten Leistungssteuerungsparametersatzes zum Senden von Daten in dem Zielschlitz in einer Serving-Zelle umfasst:
Bestimmen, durch die Endgerätvorrichtung basierend auf den SFI, in dem Teilsatz des Satzes von Leistungssteuerungsparametersätzen, des durch die Endgerätvorrichtung zum Senden von Daten in dem Zielschlitz in der Serving-Zelle verwendeten Leistungssteuerungsparametersatzes.

3. Verfahren (200) nach Anspruch 1 oder 2, wobei das Verfahren (200) ferner umfasst:

Empfangen, durch die Endgerätvorrichtung, von durch die Netzwerkvorrichtung gesandten zweiten Informationen, wobei die zweiten Informationen verwendet werden, ein durch die Endgerätvorrichtung zum Senden von Daten in dem Zielschlitz in der Serving-Zelle verwendetes Zeitdomänen-Betriebsmittel anzugeben; und

ferner Bestimmen, durch die Endgerätvorrichtung basierend auf dem Zeitdomänen-Betriebsmittel, des durch die Endgerätvorrichtung zum Senden von Daten in dem Zielschlitz in der Serving-Zelle verwendeten Leistungssteuerungsparametersatzes.

4. Verfahren (200) nach einem der Ansprüche 1 bis 3, wobei in der Serving-Zelle ein Übertragungsstatus eines Symbols korrespondierend mit einer ersten Zeitperiode in dem Zielschlitz Aufwärtsstrecken-Übertragung ist und das Bestimmen (S240), durch die Endgerätvorrichtung basierend auf den SFI, eines durch die Endgerätvorrichtung zum Senden von Daten in dem Zielschlitz in einer Serving-Zelle verwendeten Leistungssteuerungsparametersatzes umfasst:

Bestimmen, durch die Endgerätvorrichtung basierend auf dem Übertragungsstatus des Symbols korrespondierend mit der ersten Zeitperiode in dem Zielschlitz in der Nicht-Serving-Zelle, eines durch die Endgerätvorrichtung zum Senden von Daten in dem Symbol korrespondierend mit der ersten Zeitperiode in dem Zielschlitz in der Serving-Zelle verwendeten Leistungssteuerungsparametersatzes.

5. Verfahren (200) nach Anspruch 4, wobei das Bestimmen, durch die Endgerätvorrichtung basierend auf dem Übertragungsstatus des Symbols korrespondierend mit der ersten Zeitperiode in dem Zielschlitz in der Nicht-Serving-Zelle, eines durch die Endgerätvorrichtung zum Senden von Daten in dem Symbol korrespondierend mit der ersten Zeitperiode in dem Zielschlitz in der Serving-Zelle verwendeten Leistungssteuerungsparametersatzes umfasst:
Bestimmen, durch die Endgerätvorrichtung basierend auf einem Verhältnis zwischen einer Anzahl von Nicht-Serving-Zellen und einer Anzahl von Nicht-Serving-Zellen, in denen Aufwärtsstrecken-Übertragung mit dem Übertragungsstatus des Symbols korrespondierend mit der ersten Zeitperiode in dem Zielschlitz in der Nicht-Serving-Zelle in Konflikt ist, in dem für die Endgerätvorrichtung konfigurierten Satz von Leistungssteuerungsparametersätzen, des durch die Endgerätvorrichtung zum Senden von Daten in dem Symbol korrespondierend mit der ersten Zeitperiode in dem Zielschlitz in der Serving-Zelle verwendeten Leistungssteuerungsparametersatzes.

6. Verfahren (200) nach einem der Ansprüche 1 bis 5, wobei das Verfahren (200) ferner umfasst:

Empfangen, durch die Endgerätvorrichtung, von durch die Netzwerkvorrichtung gesandten dritten Informationen, wobei die dritten Informationen verwendet werden, ein durch die Endgerätvorrichtung zum Empfangen der SFI des Zielschlitzes in der Nicht-Serving-Zelle verwendetes Zeit-Frequenz-Betriebsmittel anzugeben; und Empfangen, durch die Endgerätvorrichtung auf dem durch die dritten Informationen angegebenen Zeit-Frequenz-Betriebsmittel, der SFI des Zielschlitzes in der Nicht-Serving-Zelle.

7. Kommunikationsgerät, umfassend einen an einen Speicher gekoppelten Prozessor, wobei der Speicher konfiguriert ist zum Speichern einer Anweisung und der Prozessor konfiguriert ist zum Ausführen der in dem Speicher gespeicherten Anweisung, um das Verfahren nach einem der Ansprüche 1 bis 6 zu implementieren.

8. Computerlesbares Speichermedium, konfiguriert zum Speichern eines Computerprogramms, wobei das Computerprogramm konfiguriert ist zum Ausführen einer Anweisung des Verfahrens nach einem der Ansprüche 1 bis 6.

**Revendications**

1. Procédé de commande de puissance (200), comprenant :

l'obtention (S230), par un dispositif terminal, d'informations de format de slot, SFI, d'un slot cible dans une cellule non de desserte ; et
la détermination (S240), par le dispositif terminal sur la base des SFI, d'un ensemble de paramètres de commande de puissance utilisé par le dispositif terminal pour envoyer des données dans le slot cible dans une cellule de desserte, l'ensemble de paramètres de commande de puissance appartenant à un ensemble d'ensembles de paramètres de commande de puissance configuré pour le dispositif terminal.

2. Procédé (200) selon la revendication 1, le procédé (200) comprenant en outre :

la réception, par le dispositif terminal, de premières informations envoyées par un dispositif de réseau, les premières informations étant utilisées pour indiquer un sous-ensemble de l'ensemble d'ensembles de paramètres de commande de puissance ; et
la détermination (S240), par le dispositif terminal sur la base des SFI, d'un ensemble de paramètres de commande de puissance utilisé par le dispositif terminal pour envoyer des données dans le slot cible dans une cellule de desserte comprenant :

la détermination, par le dispositif terminal sur la base des SFI, dans le sous-ensemble de l'ensemble d'ensembles de paramètres de commande de puissance, de l'ensemble de paramètres de commande de puissance utilisé par le dispositif terminal pour envoyer des données dans le slot cible dans la cellule de desserte.

3. Procédé (200) selon la revendication 1 ou 2, le procédé (200) comprenant en outre :

la réception, par le dispositif terminal, de deuxièmes informations envoyées par le dispositif de réseau, les deuxièmes informations étant utilisées pour indiquer une ressource dans le domaine temporel utilisée par le dispositif terminal pour envoyer des données dans le slot cible dans la cellule de desserte ; et
la détermination, en outre, par le dispositif terminal sur la base de la ressource dans le domaine temporel, de l'ensemble de paramètres de commande de puissance utilisé par le dispositif terminal pour envoyer des données dans le slot cible dans la cellule de desserte.

4. Procédé (200) selon l'une quelconque des revendications 1 à 3, dans la cellule de desserte, un état de transmission d'un symbole correspondant à une première période de temps dans le slot cible étant une transmission sur la liaison montante, et
la détermination (S240), par le dispositif terminal sur la base des SFI, d'un ensemble de paramètres de commande de puissance utilisé par le dispositif terminal pour envoyer des données dans le slot cible dans une cellule de desserte comprenant :
la détermination, par le dispositif terminal sur la base de l'état de transmission du symbole correspondant à la première période de temps dans le slot cible dans la cellule non de desserte, d'un ensemble de paramètres de commande de puissance utilisé par le dispositif terminal pour envoyer des données dans le symbole correspondant à la première période de temps dans le slot cible dans la cellule de desserte.

5. Procédé (200) selon la revendication 4, la détermination, par le dispositif terminal sur la base de l'état de transmission du symbole correspondant à la première période de temps dans le slot cible dans la cellule non de desserte, d'un ensemble de paramètres de commande de puissance utilisé par le dispositif terminal pour envoyer des données dans le symbole correspondant à la première période de temps dans le slot cible dans la cellule de desserte comprenant :
la détermination, par le dispositif terminal sur la base d'une relation entre une quantité de cellules non de desserte et une quantité de cellules non de desserte dans lesquelles une transmission sur la liaison montante entre en conflit avec l'état de transmission du symbole correspondant à la première période de temps dans le slot cible dans la cellule non de desserte, dans l'ensemble d'ensembles de paramètres de commande de puissance configuré pour le dispositif terminal, de l'ensemble de paramètres de commande de puissance utilisé par le dispositif terminal pour envoyer des données dans le symbole correspondant à la première période de temps dans le slot cible dans la cellule de desserte.

6. Procédé (200) selon l'une quelconque des revendications 1 à 5, le procédé (200) comprenant en outre :

la réception, par le dispositif terminal, de troisièmes informations envoyées par le dispositif de réseau, les troisièmes informations étant utilisées pour indiquer une ressource temps-fréquence utilisée par le dispositif terminal pour recevoir les SFI du slot cible dans la cellule non de desserte ; et
la réception, par le dispositif terminal sur la ressource temps-fréquence indiquée par les troisièmes informations, des SFI du slot cible dans la cellule non de desserte.

7. Appareil de communication, comprenant un processeur couplé à une mémoire, la mémoire étant configurée pour stocker une instruction, et le processeur étant configuré pour exécuter l'instruction stockée dans la mémoire pour mettre en oeuvre le procédé selon l'une quelconque des revendications 1 à 6.

8. Support de stockage lisible par ordinateur, configuré pour stocker un programme d'ordinateur, le programme d'ordinateur étant configuré pour exécuter une instruction du procédé selon l'une quelconque des revendications 1 à 6.

FIG. 1

FIG. 2

FIG. 3

| 1 | 2 | 3 | 4 | 5 | 6 | 7 | 8 |
|---|---|---|---|---|---|---|---|

Frame structure of an
interfered cell 2

| 1 | 2 | 3 | 4 | 5 | 6 | 7 | 8 | 9 | 0 | 1 |
|---|---|---|---|---|---|---|---|---|---|---|

Frame structure of an
interfered cell 1

Almost blank frame ABS

**FIG. 4**

200

| A terminal device obtain slot format information SFI of a target slot in a non-serving cell | S230 |

| The terminal device determines, based on the SFI, a power control parameter set used by the terminal device to send data in the target slot in a serving cell, where the power control parameter set belongs to a set of power control parameter sets configured for the terminal device | S240 |

**FIG. 5**

Cell 1

Cell 2

Network device 1

Network device 2

Terminal device 1

Terminal device 2

**FIG. 6**

```
┌──────────┐                    ┌──────────┐
│ Terminal │                    │ Network  │
│  device  │                    │  device  │
└──────────┘                    └──────────┘
     │                                │
     │            ┌───────────────────────────────────────────┐
     │            │ S210. Obtain configuration information of a│
     │            │   target slot in a non-serving cell of the │
     │            │  terminal device, where the terminal device│
     │            │ sends data in the target slot in a serving cell│
     │            └───────────────────────────────────────────┘
     │                                │
     │    ┌────────────────────────────────┐
     │    │ S211. Send third information based on│
     │    │ the configuration information, where │
     │    │      the third information is used to│
     │    │   indicate a time-frequency resource │
     │    │ used by the terminal device to receive│
     │    │  target slot format information SFI of│
     │    │  the target slot in the non-serving cell│
     │    └────────────────────────────────┘
     │◄───────────────────────────────┤
     │                                │
  ┌──────────────────────────────┐    │
  │ S230. Obtain the slot format information│
  │ SFI of the target slot in the non-serving cell│
  │     based on the third information │
  └──────────────────────────────┘    │
     │                                │
  ┌──────────────────────────────┐    │
  │ S240. Determine, based on the SFI in the│
  │ subset of the set of power control parameter│
  │ sets, a power control parameter set used by│
  │ the terminal device to send data in the target│
  │      slot in the serving cell    │
  └──────────────────────────────┘    │
     │                                │
```

FIG. 7

Terminal
device

Network
device

S210. Obtain configuration
information of a target slot in a non-
serving cell of a terminal device,
where the terminal device sends data
in the target slot in a serving cell

S211. Send third information based on
the configuration information, where the
third information is used to indicate a
time-frequency resource used by the
terminal device to receive slot format
information SFI in the non-serving cell

S22. Send first information based on the
configuration information, where the first
information is used to indicate a subset of
a set of power control parameter sets
included in the set of power control
parameter sets

S230. Obtain the slot format information SFI of the
target slot in the non-serving cell

S240. Determine, based on the SFI in the subset of
the set of power control parameter sets, a power
control parameter set used by the terminal device
to send data in the target slot in the serving cell

FIG. 8

| Terminal device | | Network device |
|---|---|---|

S210. Obtain configuration information of a target slot in a non-serving cell of the terminal device, where the terminal device sends data in the target slot in a serving cell

S211. Send third information based on the configuration information, where the third information is used to indicate a time-frequency resource used by the terminal device to receive slot format information SFI in the non-serving cell

S212. Determine a transmission status in a first time period in the non-serving cell based on the configuration information, where in the serving cell, a transmission status of a symbol corresponding to the first time period in the target slot is uplink sending

S213. Determine first information based on the transmission status of the symbol corresponding to the first time period in target slot in the non-serving cell

S220. Send the first information, where the first information is used to indicate a subset of a set of power control parameter sets included in the set of power control parameter sets

S230. Obtain the slot format information SFI of the target slot in the non-serving cell

S240. Determine, based on the SFI in the subset of the set of power control parameter sets, a power control parameter set used by the terminal device to send data in the target slot in the serving cell

FIG. 9

```
┌──────────┐                              ┌──────────┐
│ Terminal │                              │ Network  │
│  device  │                              │  device  │
└────┬─────┘                              └────┬─────┘
     │                                         │
     │        ┌────────────────────────────────┴────────────────┐
     │        │ S210. Obtain configuration information of a target │
     │        │  slot in a non-serving cell of the terminal device,│
     │        │ where the terminal device sends data in the target slot│
     │        │            in a serving cell                       │
     │        └────────────────────────────────┬────────────────┘
     │                                         │
     │ ┌─────────────────────────────────────┐ │
     │ │ S211. Send third information, where the third │
     │ │ information is used to indicate a time-frequency │
     │ │ resource used by the terminal device to receive │
     │ │ slot format information SFI in the non-serving cell │
     │◀─────────────────────────────────────── │
```

S210. Obtain configuration information of a target slot in a non-serving cell of the terminal device, where the terminal device sends data in the target slot in a serving cell

S211. Send third information, where the third information is used to indicate a time-frequency resource used by the terminal device to receive slot format information SFI in the non-serving cell

S212. Determine a transmission status in a first time period in the non-serving cell based on the configuration information, where in the serving cell, a transmission status of a symbol corresponding to the first time period in the target slot is uplink sending

S213. Determine first information based on the transmission status of the symbol corresponding to the first time period in the non-serving cell

S220. Send the first information, where the first information is used to indicate a subset of a set of power control parameter sets included in the set of power control parameter sets

S221. Send second information, where the second information is used to indicate a time-frequency resource used by the terminal device to send uplink data in the target slot in the serving cell

S230. Obtain the slot format information SFI of the target slot in the non-serving cell

S240. Determine, based on the SFI, a power control parameter set used by the terminal device to send data in the target slot in the serving cell

FIG. 10

Communications apparatus 300

Processor
310

Memory
320

Transceiver
330

FIG. 11

Communications apparatus 400

Processing module 410

Storage module 420

Transceiver module 430

FIG. 12

Communications apparatus 500

Processor
510

Memory
520

Transceiver
530

FIG. 13

Communications apparatus 600

Processing module 610

Storage module 620

Transceiver module 630

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014086112 A1

**Non-patent literature cited in the description**

- **SAMSUNG.** Cross-link interference management based on power control. *3GPP DRAFT; R1-1710758, 3RD GENERATION PARTNERSHIP PROJECT (3GPP),* vol. RAN WG1 (Qingdao), 20170626